# EUROPÄISCHE PATENTSCHRIFT

(11) **EP 3 271 855 B1**
(45) Veröffentlichungstag und Bekanntmachung des Hinweises auf die Patenterteilung: **29.04.2020**
(21) Anmeldenummer: 16711574.0
(22) Anmeldetag: 17.03.2016
(51) Int. Cl.: G06F 21/33

(54) **VERFAHREN ZUR ERZEUGUNG EINES ZERTIFIKATS FÜR EINEN SICHERHEITSTOKEN**
METHOD FOR GENERATING A CERTIFICATE FOR A SECURITY TOKEN
PROCÉDÉ DE GÉNÉRATION D'UN CERTIFICAT POUR UN JETON DE SÉCURITÉ

(30) Priorität: 17.03.2015 DE 102015204828
(43) Veröffentlichungstag der Anmeldung: 24.01.2018
(73) Patentinhaber: Bundesdruckerei GmbH, 10969 Berlin (DE)
(72) Erfinder: WIRTH, Klaus-Dieter, 12683 Berlin (DE); SCHOLZE, Steffen, 13469 Berlin (DE); SCHWAN, Matthias, 10437 Berlin (DE); FILZHUTH, Elke, 12359 Berlin (DE); MÜLLER, Frank, 10407 Berlin (DE)
(74) Vertreter: Richardt Patentanwälte PartG mbB
(86) Internationale Anmeldenummer: PCT/EP2016/055762
(87) Internationale Veröffentlichungsnummer: WO 2016/146726

(56) Entgegenhaltungen:
- WO-A1-2011/006912
- "Advanced Security Mechanisms for Machine Readable Travel Documents and eIDAS Token - Part 2", , 16. Dezember 2014 (2014-12-16), XP055257174, Gefunden im Internet: URL:https://www.bsi.bund.de/SharedDocs/Dow nloads/EN/BSI/Publications/TechGuidelines/ TR03110/ [gefunden am 2016-03-10]
- Bsi ET AL: "Advanced Security Mechanisms for Machine Readable Travel Documents and eIDAS Token", Part 3 - Common Specifications Version 2.20, 3. Februar 2015 (2015-02-03), XP055258090, Gefunden im Internet: URL:https://www.bsi.bund.de/SharedDocs/Dow nloads/EN/BSI/Publications/TechGuidelines/ TR03110/BSI_TR-03110_Part-3-V2_2.pdf?__blo b=publicationFile&v=1 [gefunden am 2016-03-14]

## Beschreibung

Die Erfindung betrifft ein Verfahren zur Erzeugung eines Zertifikats für einen Sicherheitstoken eines Nutzers sowie ein entsprechendes elektronisches System.

Aus dem Stand der Technik ist die Verwendung von elektronischen Pässen zur elektronischen Identifizierung, Authentifizierung und andern "Trust-Services" bekannt (vergleiche Technical Guideline TR-03110-2, "Advanced Security Mechanisms for Machine-Readable Travel Documents and eIDAS Token - Part 2 - Protocols for Electronic IDentification, Authentication and Trust Services (eIDAS)", Version 2.20 beta2, 11. März 2014, Bundesamt für Sicherheit in der Informationstechnik, ANSSI).

Aus DE 10 2010 030 590 A1 ist ein Verfahren zur Erzeugung eines Zertifikats zur Signierung elektronischer Dokumente mittels eines ID-Tokens bekannt, bei dem das Zertifikat durch ein ID-Provider-Computersystem erzeugt wird, welches mit dem ID-Token über ein Netzwerk verbunden ist.

Die folgende Offenbarung des Bundesamts für Sicherheit in der Informationstechnik ist weiterer Stand der Technik: "Advanced Security Mechanisms for Machine Readable Travel Documents and eIDAS Token - Part 2", vom 16. Dezember 2014.

Der Erfindung liegt demgegenüber die Aufgabe zugrunde, ein Verfahren zur Erzeugung eines Zertifikats für einen Sicherheitstoken zu schaffen sowie ein entsprechendes elektronisches System.

Die der Erfindung zugrunde liegende Aufgabe wird mit den Merkmalen der unabhängigen Patentansprüche gelöst. Ausführungsformen der Erfindung sind in den abhängigen Patentansprüchen angegeben.

Unter einem "Zertifikat" wird hier ein Zertifikat einer Public-Key-Infrastructure (PKI) verstanden, beispielsweise nach dem Standard X.509 oder ein Card Verifiable Certificate (CVC) (vergleiche ISO 7816 - Teil 8). Ein Zertifikat ist ein digitaler Datensatz, der einen öffentlichen Schlüssel beinhaltet und signiert ist.

Unter einem "ID-Token" wird hier ein Dokument, insbesondere ein Wert- oder Sicherheitsdokument, insbesondere ein hoheitliches Dokument, insbesondere ein papierbasiertes und/oder kunststoffbasiertes Dokument, wie zum Beispiel ein elektronisches Ausweisdokument, insbesondere Reisepass, Personalausweis, Visum, Führerschein, Fahrzeugschein, Fahrzeugbrief, Gesundheitskarte, oder einen Firmenausweis, oder eine anderes ID-Dokument, eine Chipkarte, Zahlungsmittel, insbesondere Banknote, Bankkarte oder Kreditkarte, Frachtbrief oder ein sonstiger Berechtigungsnachweis verstanden. Insbesondere kann es sich bei dem ID-Token um ein Machine-Readable Travel Document, wie beispielsweise von der Internationalen Luftfahrtbehörde (ICAO) und/oder dem BSI standardisiert, handeln.

Unter einem "Sicherheitstoken" wird hier eine Chipkarte, ein Dokument, ein USB-Stick oder ein anderes Secure Element (SE), wie beispielsweise von Global Platform (www.globalplatform.org) spezifiziert, verstanden.

Unter einem "geschützten Speicherbereich" wird hier ein Speicherbereich eines elektronischen Speichers verstanden, auf den ein Zugriff über eine Kommunikationsschnittstelle des ID-Tokens bzw. des Sicherheitstokens nicht oder nur nach Durchführung eines kryptografischen Protokolls möglich ist.

Unter einer "Dokumenten-PKI" wird hier eine public key infrastructure (PKI) verstanden, die zur Erstellung von Zertifikaten für ID-Token, also Dokumente, dient, wobei die Zertifikate zur Prüfung der Authentizität des betreffenden ID-Tokens verwendet werden, beispielsweise wie in technische Richtlinie TR-03127, "Architektur elektronischer Personalausweis und elektronischer Aufenthaltstitel", Version 1.15, 1. August 2012, Bundesamt für Sicherheit in der Informationstechnik, spezifiziert, vergleiche insbesondere Seite 27 unter 5.1.

Unter einer "Berechtigungs-PKI" wird hier eine PKI verstanden, die zur Erstellung von Zertifikaten, insbesondere sogenannten Berechtigungszertifikaten, dient, welcher zur Prüfung der Zugriffsberechtigung eines Dienstanbieters auf einen ID-Token dienen, beispielsweise wie in der o.g. technischen Richtlinie TR-03127 spezifiziert, vergleiche Seite 27 ff. unter Punkt 5.2.

Unter einem "Attribut" wird hier eine Information betreffend des Nutzers und/oder des ID-Tokens bezeichnet, wie zum Beispiel eine Information betreffend die Identität des Nutzers, beispielsweise dessen Name, Wohnort, Geburtsdatum oder eine den ID-Token selbst betreffende Information, wie zum Beispiel den Herausgeber des ID-Tokens, das Datum der Ausstellung des ID-Tokens oder die Gültigkeitsdauer des ID-Tokens.

Ein solches Attribut kann in den ID-Token anlässlich der Produktion des ID-Tokens durch eine Personalisierungsanlage gespeichert werden. Alternativ kann ein Attribut nachträglich in den ID-Token geladen werden, nachdem ein Nutzer bereits den ID-Token in Benutzung genommen hat, wie es beispielsweise in DE 10 2015 200 313 derselben Anmelderin, deren Offenbarungsgehalt hiermit voll umfänglich durch Inbezugnahme zum Gegenstand der vorliegenden Patentanmeldung gemacht wird, offenbart ist.

Unter einer "Kommunikationsschnittstelle" wird hier eine Schnittstelle verstanden, über die Daten empfangen und gesendet werden können, wobei die Kommunikationsschnittstelle kontaktbehaftet oder kontaktlos ausgebildet sein kann, beispielsweise nach einem RFID- und/oder NFC-Standard.

Unter einem "ID-Provider-Computersystem" wird hier ein Computersystem verstanden, welches dazu ausgebildet ist, Attribute aus dem ID-Token eines Nutzers auszulesen und eine Attributspezifikation in den ID-Token zu schreiben. Vorzugsweise wird das ID-Provider-Computersystem in einem sogenannten Trustcenter betrieben, um ein möglichst hohes Maß an Sicherheit zu schaffen.

Unter einem "Attribut-Provider-Computersystem" wird hier ein Computersystem verstanden, welches dazu ausgebildet ist, eine Attributspezifikation aus dem ID-Token eines Nutzers auszulesen und Attribute in den ID-Token zu schreiben.

Unter einer "Attributspezifikation" oder "Attribute Request" (AR) wird hier eine Beschreibung von denjenigen Attributen verstanden, die zum Beispiel von einem Dienst-Computersystem zur Erbringung eines Dienstes benötigt werden. Die Attribute können über Feldnamen von Datenfeldern identifiziert werden, in denen die jeweiligen Attributwerte gespeichert sind, und/oder über ein semantisches Netz, d.h. eine Konvention, wie Attribute systemübergreifend bezeichnet werden.

Unter einem "Dienst-Computersystem" wird hier ein Computersystem verstanden, welches über eine Netzwerk-Schnittstelle zur Verbindung mit dem Netzwerk verfügt, sodass mithilfe eines Internetbrowsers oder eines anderen Anwendungsprogramms auf von dem Dienst-Computersystem gespeicherte oder generierte Internetseiten zugegriffen werden kann. Insbesondere kann es sich bei dem Dienst-Computersystem um einen Internetserver zur Verfügungstellung einer eCommerce- oder eGovernment-Anwendung handeln, insbesondere einen Onlineshop oder einen Behördenserver. Der Dienst kann auch lediglich in dem Nachladen von Attributen bestehen.

Unter einem "Nutzer-Computersystem" wird hier ein Computersystem verstanden, auf welches der Nutzer Zugriff hat. Hierbei kann es sich zum Beispiel um einen Personal Computer (PC), ein Tablet PC oder ein Mobilfunkgerät, insbesondere ein Smartphone, mit einem üblichen Internetbrowser, wie zum Beispiel Microsoft Internet Explorer, Safari, Google Chrome, Firefox oder einem anderen Anwendungsprogramm zum Zugriff auf das Dienst-Computersystem handeln. Das Nutzer-Computersystem hat eine Schnittstelle zur Verbindung mit dem Netzwerk, wobei es sich bei dem Netzwerk um ein privates oder öffentliches Netzwerk handeln kann, insbesondere das Internet. Je nach Ausführungsform kann diese Verbindung auch über ein Mobilfunknetz hergestellt werden.

Unter einem "Lesegerät" wird hier ein elektronisches Gerät verstanden, welches einen Lesezugriff und auch einen Schreibzugriff auf den ID-Token ermöglicht, insbesondere ein sogenanntes Chipkartenterminal. Das Lesegerät kann einen integralen Bestandteil des Nutzer-Computersystems bilden oder als separate Komponente ausgeführt sein, beispielsweise als Peripheriegerät des Nutzer-Computersystems. Insbesondere kann es sich bei dem Lesegerät um ein sogenanntes Klasse 1, 2 oder 3 Chipkartenlesegerät handeln.

Unter einem "nichtflüchtigen elektronischen Speicher" wird hier ein Speicher zur Speicherung von Daten, insbesondere von Attributen, verstanden, der auch als Non-Volatile Memory (NVM) bezeichnet wird. Insbesondere kann es sich hierbei um ein EEPROM, beispielsweise ein Flash-EEPROM, kurz als Flash bezeichnet, handeln.

Unter einem "geschützten Speicherbereich" wird hier ein Speicherbereich verstanden, auf den ein Zugriff, das heißt ein Lesezugriff oder ein Schreibzugriff, von einem mit dem Speicher gekoppelten Prozessor nur dann ermöglicht wird, wenn eine hierzu erforderliche Bedingung erfüllt ist. Hierbei kann es sich zum Beispiel um eine kryptografische Bedingung, insbesondere eine erfolgreiche Authentisierung und/oder eine erfolgreiche Berechtigungsprüfung, handeln.

Unter einem "Prozessor" wird hier eine Logikschaltung verstanden, die zur Ausführung von Programminstruktionen dient. Die Logikschaltung kann auf einem oder mehreren diskreten Bauelementen implementiert sein, insbesondere auf einem Chip.

Ausführungsformen der Erfindung sind besonders vorteilhaft, da es dem Nutzer ermöglicht wird, für einen Sicherheitstoken ein Zertifikat zu erzeugen, und zwar ohne Einschaltung eines eID-Provider-Computersystems und auch ohne das Erfordernis einer Netzwerkverbindung. Der Nutzer kann also selbst dann, wenn keine Netzwerkverbindung zur Verfügung steht autark und dennoch ohne Einschränkung hinsichtlich der Sicherheit und der Vertrauenswürdigkeit ein Zertifikat für seinen Sicherheitstoken mithilfe seines ID-Tokens erzeugen. Dies hat den weiteren Vorteil der Stärkung des Datenschutzes und der informationellen Selbstbestimmung des Nutzers, da keinerlei Daten des Nutzers für die Erzeugung des Zertifikats über ein Netzwerk übertragen werden müssen und auch keine hoheitliche Institution oder ein sonstiger Dritter hierzu involviert werden müssen.

Nach Ausführungsformen der Erfindung hat der ID-Token keine eigene Energieversorgung, insbesondere keine Primärbatterie, sondern wird über seine Kommunikationsschnittstelle von einem Lesegerät mit Energie versorgt, solange sich der ID-Token in der Reichweite des Lesegeräts befindet. Der ID-Token verfügt dann also über keinen eigenen Zeitgeber, benötigt aber eine Zeitinformation für die Erzeugung des Zertifikats, um die Gültigkeitsdauer des Zertifikats limitieren zu können.

Um eine hierzu geeignete vertrauenswürdige Zeitinformation zu gewinnen, kann so vorgegangen werden, dass initial, zum Beispiel bei der Personalisierung des ID-Tokens, eine Zeitinformation in einen nichtflüchtigen Speicher des ID-Tokens gespeichert wird. Wird der ID-Token anschließend von dem Nutzer verwendet, so empfängt der ID-Token über seine Schnittstelle - je nach Verwendungshäufigkeit des Nutzers - in zeitlichen Abständen Zertifikate über seine Kommunikationsschnittstelle, mithilfe derer sich zum Beispiel externe Dienste gegenüber dem ID-Token authentifizieren und/oder deren Berechtigung nachweisen. Solche über die Kommunikationsschnittstelle empfangenen Zertifikate tragen eine Zeitinformation, die zur Aktualisierung der in dem ID-Token gespeicherten Zeitinformationen verwendet werden, beispielsweise wie es in der WO 2008/071627 A1 offenbart ist, die hiermit durch Inbezugnahme voll umfänglich zum Gegenstand der vorliegenden Patentanmeldung gemacht wird.

Nach Ausführungsformen der Erfindung kann der Nutzer in den ID-Token Attribute nachladen. Dies kann gemäß DE 10 2015 200 313 erfolgen, deren Offenbarungsgehalt hiermit vollumfänglich zum Gegenstand der vorliegenden Patentanmeldung gemacht wird.

Unter dem "Nachladen" eines Attributs wird hier verstanden, dass nach der Personalisierung des ID-Tokens ein Attribut nachträglich in dem ID-Token gespeichert wird, wenn sich der ID-Token bereits im Wirkbetrieb befindet, das heißt, wenn der ID-Token von dem Nutzer bereits in Benutzung genommen worden ist. Dementsprechend wird unter einem "nachgeladenen Attribut" hier ein Attribut verstanden, welches nach der Personalisierung des ID-Tokens nachträglich in dem ID-Token auf sichere Art und Weise gespeichert worden ist.

Nach Ausführungsformen der Erfindung wird zum Nachladen von Attibuten und dem optionalen anschließenden Lesen von Attributen aus einem ID-Token eines Nutzers wie folgt vorgegangen:
1. Der Nutzer sendet eine Dienstanforderung von seinem Nutzer-Computersystem über ein Netzwerk, insbesondere ein öffentliches Netzwerk wie das Internet, an ein Dienst-Computersystem, welches mit einem ID-Provider-Computersystem gekoppelt ist. Hierzu gibt der Nutzer beispielsweise eine URL in einen Internetbrowser seines Nutzer-Computersystems ein, um eine sogenannte Internetsession mit dem Dienst-Computersystem aufzubauen.
   Bei dem Dienst-Computersystem kann es sich zum Beispie! um einen Onlineshop oder ein anderes eCommerce-Portal oder einen Behördenserver, der eine eGovernment-Anwendung zur Verfügung stellt, handeln. Bei der Dienstanforderung des Nutzers kann es sich um die Übertragung einer Kaufentscheidung des Nutzers handeln, die der Nutzer zum Beispiel durch Anklicken eines virtuellen Bedienelements auf der Webseite des Dienst-Computersystems, wie zum Beispiel "Kaufen" oder "buy now" eingibt, wobei diese Dienstanforderung zum Beispiel als http-Request oder https-Request über die Internetsession an das Dienst-Computersystem übertragen werden kann. Bei einer eGovernment-Anwendung kann es sich analog dazu bei der Dienstanforderung um die Übertragung einer Anforderung des Nutzers eines behördlichen Vorgangs, wie zum Beispiel die Ausstellung einer Meldebescheinigung, die Anmeldung eines Kraftfahrzeugs oder die Meldung einer Wohnortänderung oder dergleichen handeln.
2. Das Dienst-Computersystem benötigt für die Erbringung des mit der Dienstanforderung angeforderten Dienstes Attribute des Nutzers und - je nach Anwendungsfall - auch Attribute des ID-Tokens selbst. Beispielsweise kann die erste Attributspezifikation die Attribute Name, Geburtsdatum, Anschrift des Nutzers, Kontonummer des Nutzers, Kreditwürdigkeit des Nutzers sowie Gültigkeitsdauer des ID-Token beinhalten. Die Attribute gemäß dieser ersten Attributspezifikation benötigt das Dienst-Computersystem also zur Erbringung des Dienstes für den Nutzer. Diese erste Attributspezifikation sendet das Dienst-Computersystem an das ID-Provider-Computersystem, wobei dies über das Netzwerk erfolgen kann. Optional kann dies über das Nutzer-Computersystem erfolgen. Alternativ ist das ID-Provider-Computersystem ein integraler Bestandteil des Dienst-Computersystems, sodass das Senden der ersten Attributspezifikation zum Beispiel über einen internen Datenbus oder eine LAN-Verbindung erfolgt.
3. Authentifizierung des Nutzers gegenüber dem ID-Token. Hierzu gibt der Nutzer eine geheime Kennung, wie zum Beispiel die sogenannte Personal Identification Number (PIN) ein. Dies kann je nach Ausführungsform unmittelbar durch Eingabe in den ID-Token erfolgen, durch Eingabe in das Lesegerät oder durch Eingabe in das Nutzer-Computersystem. Vorzugsweise erfolgt die Authentifizierung des Nutzers gegenüber dem ID-Token mittels einer "Fernüberprüfung", worunter hier jedes Verfahren verstanden wird, bei dem die zu überprüfende Kennung nicht in den ID-Token unmittelbar eingegeben wird, um sie mit der dort gespeicherten Kennung zu vergleichen, sondern bei dem die Überprüfung mittels eines das Lesegerät und den ID-Token involvierenden Protokolls erfolgt, bei dem die Kennung, die in das Lesegerät eingegeben wird, nicht an den ID-Token übertragen werden muss. Entsprechende Protokolle sind an sich aus dem Stand der Technik bekannt, wie zum Beispiel Strong Password Only Authentication Key Exchange (SPEKE), Diffie-Hellman Encripted Key Exchange (DH-EKE), Bellovin-Merritt Protokoll oder Password Authenticated Connection Establishment (PACE). Das SPEKE-Protokoll ist beispielsweise bekannt aus www.jablon.org/speke97.html, US 6,792,533 B2 und US 7,139,917 B2. Unter anderem ebenfalls aus www.jablon.org/speke97.html ist das DH-EKE-Protokoll bekannt. Unter anderem aus US 5,241,599 ist das Bellovin-Merritt-Protokoll bekannt. Aus Technical Guideline TR-03110 des Bundesamt für Sicherheit in der Informationstechnik ist das PACE-Protokoll bekannt, welches sich besonders für elliptische Kurven-Kryptographie eignet, vergleiche hierzu auch DE 102007000587 A1 und DE 102023202001 A1. Vorzugsweise authentifiziert sich neben dem Nutzer auch das Lesegerät gegenüber dem ID-Token, wobei auch ein gesicherter Übertragungskanal, das heißt ein sogenannter Secure Messaging-Kanal, zwischen dem ID-Token und dem Lesegerät aufgebaut werden kann, beispielsweise indem ein Session Key nach einem Diffie-Hellman-Protokoll zwischen dem ID-Token und dem Lesegerät vereinbart wird.
4. Das ID-Provider-Computersystem authentifiziert sich gegenüber dem ID-Token über das Netzwerk und weist vorzugsweise auch seine Berechtigung für einen Lesezugriff oder Schreibzugriff nach, indem es beispielsweise sein Berechtigungszertifikat über das Netzwerk an den ID-Token überträgt.
   Vorzugsweise authentifiziert sich auch der ID-Token gegenüber dem ID-Provider-Computersystem, das heißt es erfolgt sowohl die sogenannte Terminal Authentication (TA) des ID-Provider-Computersystems gegenüber dem ID-Token und die Chip Authentication (CA) des ID-Tokens, das heißt des in dem ID-Token beinhalteten Chips mit dem Prozessor, gegenüber dem ID-Provider-Computersystem. Die TA und die CA können gemäß BSI TR-03110 durchgeführt werden.
5. Hierbei kann ein erster gesicherter Übertragungskanal nach einem Secure-Messaging-Verfahren aufgebaut werden, indem bei der TA und/oder der CA ein Session Key zwischen dem ID-Token und dem ID-Provider-Computersystem für eine Ende-zu-Ende-Verschlüsselung vereinbart wird.
6. Das ID-Provider-Computersystem führt dann einen ersten Lesezugriff aus, um Attribute gemäß der ersten Attributspezifikation aus dem ID-Token auszulesen.
7. Diejenigen Attribute gemäß der ersten Attributspezifikation, die in dem ID-Token gespeichert sind und für die das ID-Provider-Computersystem die erforderliche Leseberechtigung hat, werden aufgrund des ersten Lesezugriffs von dem ID-Token ausgegeben und über den ersten gesicherten Übertragungskanal von dem ID-Token an das ID-Provider-Computersystem über das Netzwerk übertragen. Diese von dem ID-Token ausgegebenen Attribute werden als "erste Teilmenge" der ersten Attributspezifikation bezeichnet. Beispielsweise sind in dem ID-Token lediglich der Name, das Geburtsdatum, die Anschrift des Nutzers sowie die Gültigkeitsdauer des ID-Tokens gespeichert, nicht aber die Kontonummer und die Kreditwürdigkeit des Nutzers, In diesem Fall beinhaltet also die erste Teilmenge den Namen, das Geburtsdatum, die Anschrift des Nutzers und die Gültigkeitsdauer, nicht aber die Kontonummer und die Kreditwürdigkeit des Nutzers, die nicht in dem ID-Token gespeichert sind.
8. Da aufgrund des ersten Lesezugriffs nicht alle erforderlichen Attribute gemäß der ersten Attributspezifikation gelesen werden konnten, wird eine zweite Attributspezifikation erzeugt, die eine zweite Teilmenge der Attribute der ersten Attributspezifikation spezifiziert, nämlich diejenigen Attribute, welche in der ersten Attributspezifikation spezifiziert sind, mit dem ersten Lesezugriff aber nicht ausgelesen werden konnten, das heißt hier die Kontonummer und die Kreditwürdigkeit des Nutzers. Die zweite Attributspezifikation wird zum Beispiel von dem ID-Provider-Computersystem erzeugt und über den ersten gesicherten Übertragungskanal an den ID-Token übertragen.
9. Die zweite Attributspezifikation wird in dem ID-Token gespeichert. Dabei kann bei Speicherung im nicht-flüchtigen Speicher des ID-Tokens eine aus vorherigen Protokollsitzungen gespeicherte Attributspezifikation ersetzt werden.
10. Ein Attribut-Provider-Computersystem authentifiziert sich gegenüber dem ID-Token über das Netzwerk. Dies kann analog zu der Authentifizierung des ID-Provider-Computersystems gegenüber dem ID-Token in dem oben genannten Schritt 4 erfolgen, nämlich mit einer sogenannten TA und einer CA.
11. Hierbei kann ein zweiter gesicherter Übertragungskanal mit Ende-zu-Ende-Verschlüsselung zwischen dem ID-Token und dem Attribut-Provider-Computersystem aufgebaut werden, wobei der erste gesicherte Übertragungskanal bestehen bleibt.
12. Die zweite Attributspezifikation wird dann von dem ID-Token ausgegeben und über den zweiten gesicherten Übertragungskanal an das Attribut-Provider-Computersystem übertragen. Auf diese Weise wird an das Attribut-Provider-Computersystem kommuniziert, welche Attribute zusätzlich von dem bereits durch das ID-Provider-Computersystem gelesenen Attribute erforderlich sind. Diese Attribute können in einem Speicher des Attribut-Provider-Computersystems vorhanden sein, wie zum Beispiel in einer Datenbank des Attribut-Provider-Computersystems, oder das Attribut-Provider-Computersystem greift auf eine externe Datenbank zu, um diese Attribute gemäß der zweiten Attributspezifikation zu lesen. Alternativ ist es auch möglich, dass das Attribut-Provider-Computersystem selbst ein oder mehrere der Attribute gemäß der zweiten Attributspezifikation generiert.
13. Das Attribut-Provider-Computersystem führt dann einen Schreibzugriff über den zweiten gesicherten Übertragungskanal durch, um die von ihm gelesenen oder erzeugten Attribute gemäß der zweiten Attributspezifikation in dem ID-Token zu speichern. Damit sind diese Attibute also in den ID-Token nachgeladen.
14. Das ID-Provider-Computersystem führt dann einen zweiten Lesezugriff durch, und zwar über den noch bestehenden ersten gesicherten Übertragungskanal, um die noch fehlenden Attribute gemäß der zweiten Attributspezifikation aus dem ID-Token zu lesen, die zwischenzeitlich dort in dem Schritt 13 von dem Attribut-Provider-Computersystem gespeichert worden sind.
15. Die nun insgesamt in dem ID-Provider-Computersystem vorliegenden Attribute gemäß der ersten Attributspezifikation werden an das Dienst-Computersystem ausgegeben, damit dieses den angeforderten Dienst erbringen kann. Diese Ausgabe kann unmittelbar von dem ID-Provider-Computersystem an das Dienst-Computersystem erfolgen, wenn das ID-Provider-Computersystem einen integralen Bestandteil des Dienst-Computersystems bildet, oder über das Netzwerk, wobei vorzugsweise die von dem ID-Provider-Computersystem ausgegebenen Attribute von dem ID-Provider-Computersystem signiert werden, um Manipulationen zu unterbinden.

Ausführungsformen der Erfindung sind besonders vorteilhaft, da sie die Einbeziehung eines zusätzlichen Attribut-Provider-Computersystems ermöglichen, welches Attribute liefern kann, die in dem ID-Token zunächst nicht vorhanden sind. Dies kann mit der gleichen Sicherheit und Vertrauenswürdigkeit erfolgen, wie es für die ursprünglich in dem ID-Token gespeicherten Attribute der Fall ist und auch unter Wahrung der informationellen Selbstbestimmung des Nutzers und dem Gebot der Datensparsamkeit, da keine Mitteilung der in dem ID-Token ursprünglich gespeicherten Attribute an das Attribut-Provider-Computersystem erfolgen muss.

Nach einer Ausführungsform erfolgt die Speicherung der Attribute in dem oben genannten Schritt 13 in dem nichtflüchtigen elektronischen Speicher des ID-Tokens, sodass diese zusätzlich von dem Attribut-Provider-Computersystem in den ID-Token geschriebenen Attribute zur weiteren Verwendung zur Verfügung stehen. Bei einer nachfolgenden Dienstanforderung des Nutzers an das Dienst-Computersystem müssen also diese zusätzlichen Attribute nicht erneut über das Attribut-Provider-Computersystem beschafft werden, sondern stehen in dem ID-Token bereits zur Verfügung, sodass sie bereits in dem oben genannten Schritt 6 von dem ID-Provider-Computersystem ausgelesen werden können.

Nach einer Ausführungsform der Erfindung ist die Kommunikationsschnittstelle des ID-Tokens drahtlos ausgebildet, das heißt beispielsweise als sogenannte RFID-oder NFC-Schnittstelle. Neben der drahtlosen Kommunikation dient diese Schnittstelle auch zur Einkopplung von Energie in den ID-Token, um diesen mit der für seinen Betrieb erforderlichen elektrischen Energie zu versorgen. Zusätzlich zu dem nicht-flüchtigen elektronischen Speicher hat der ID-Token einen flüchtigen elektronischen Speicher, wie zum Beispiel ein RAM oder einen Arbeitsspeicher des Prozessors. Die zweite Attributspezifikation wird vorzugsweise in den flüchtigen elektronischen Speicher geschrieben (vergleiche oben Schritt 9). Wird nämlich nach dem Schritt 9 der ID-Token aus der Reichweite des Lesegeräts entfernt, so führt dies dazu, dass die zweite Attributspezifikation aus dem flüchtigen elektronischen Speicher gelöscht wird. Ein neuer Protokollablauf ist in diesem Fall zu starten.Hierdurch wird vermieden, dass sich der ID-Token in einem undefinierten Zustand befindet, wenn er zum Beispiel nach dem oben genannten Schritt 9 aus der Reichweite des Lesegeräts entfernt wird, um eventuelle Missbrauchsmöglichkeiten hierdurch zu unterbinden. Wird die zweite Attributspezifikation in den nicht-flüchtigen elektronischen Speicher geschrieben, bleibt auch nach Entfernung des ID-Tokens aus der Reichweite des Lesegeräts die zweite Attributspezifikation im Speicher erhalten.

Solange ein Netzwerk zur Verfügung steht, kann der Nutzer seinen ID-Token für verschiedene Dienste, beispielsweise für eCommerce oder eGovernment-Anwendungen verwenden, wobei hierzu je nach Bedarf Attribute in den ID-Token nachgeladen werden. Nach Ausführungsformen der Erfindung können ein oder mehrere solcher nachgeladenen Attribute in die Erzeugung des Zertifikats für den Sicherheitstoken eingehen, indem der Nutzer eine entsprechende Auswahl eingibt, und zwar auch dann, wenn keine Netzwerkverbindung besteht.

Im Weiteren werden Ausführungsformen der Erfindung mit Bezugnahme auf die Zeichnungen näher erläutert. Es zeigen:
- Figur 1: ein Blockdiagramm einer ersten Ausführungsform eines erfindungsgemäßen elektronischen Systems,
- Figur 2: ein Ablaufdiagramm einer Ausführungsform eines erfindungsgemäßen Verfahrens,
- Figur 3: eine Ausführungsform der Struktur einer Dokumenten-PKI und einer Berechtigungs-PKI für das elektronische System gemäß Figur 1.
- Figur 4: ein Blockdiagramm einer Ausführungsform eines erfindungsgemäßen Computersystems,
- Figur 5: ein Flussdiagramm einer Ausführungsform eines erfindungsgemäßen Verfahrens,
- Figur 6: ein UML-Diagramm einer Ausführungsform eines erfindungsgemäßen Verfahrens.

Im Weiteren werden identische oder einander entsprechende Elemente der nachfolgend beschriebenen Ausführungsformen mit identischen Bezugszeichen gekennzeichnet.

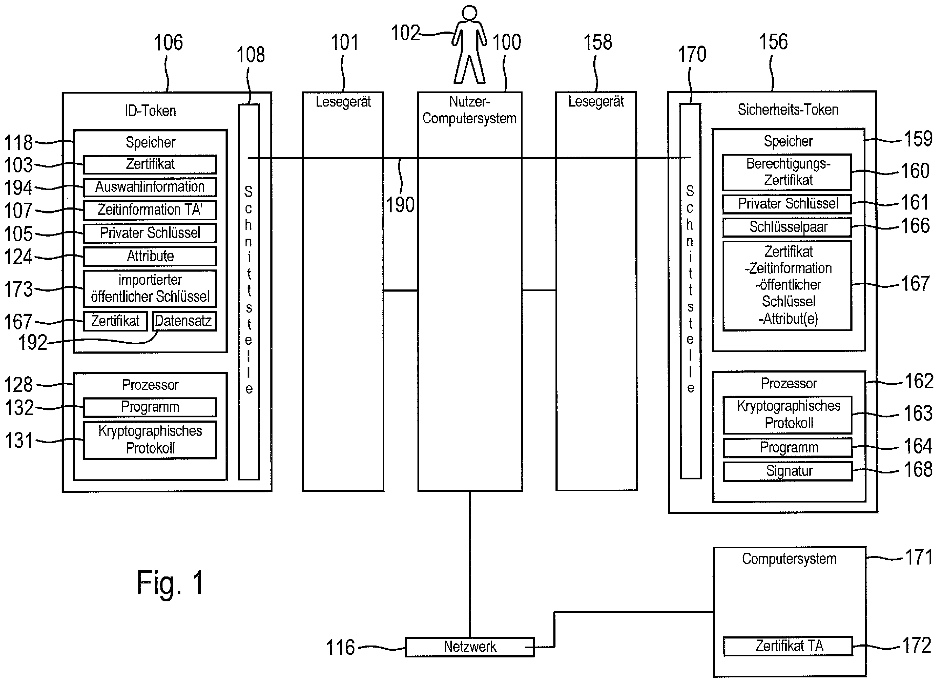

Die Figur 1 zeigt ein elektronisches System mit einem Nutzer-Computersystem 100 eines Nutzers 102. Bei dem Nutzer-Computersystem 100 kann es sich um einen Personalcomputer, einen tragbaren Computer, wie zum Beispiel einen Laptop- oder Notebook-Computer, ein mobiles Telekommunikationsgerät, insbesondere ein Smartphone oder einen Tablet-Computer, oder einen anderen mobilen batteriegetriebenen Computer handeln, der vorzugsweise über eine Netzwerkschnittstelle zur Kommunikation über ein Netzwerk 116, bei dem es sich um ein privates oder ein öffentliches Netzwerk, insbesondere das Internet, handeln kann, verfügt. An das Nutzer-Computersystem 100 ist ein Lesegerät 101 angeschlossen, beispielsweise ein Chipkarten-Lesegerät, insbesondere ein Klasse I, II, III oder IV Kartenlesegerät für eine kontaktbehaftete oder kontaktlose Kommunikation mit einem ID-Token 106.

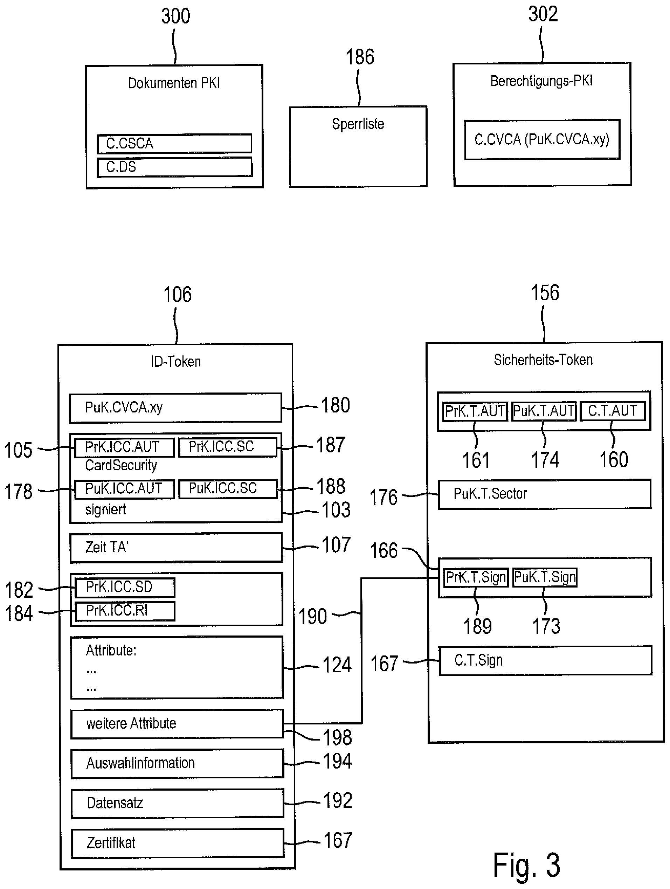

Der ID-Token 106 hat einen elektronischen Speicher 118, in dem ein Zertifikat 103 einer Dokumenten-PKI 300 (vergleiche Figur 3) gespeichert ist. In dem Zertifikat 103 befindet sich ein öffentlicher Schlüssel, der zusammen mit einem privaten Schlüssel 105 ein asymmetrisches kryptografisches Schlüsselpaar bildet, so dass der private Schlüssel 105 dem Zertifikat 103 zugeordnet ist. Der private Schlüssel 105 sowie Attribute 124 des Nutzers 102 und/oder des ID-Tokens 106 sowie eine Zeitinformation 107, die das aktuelle Datum je nach der Häufigkeit der Verwendung des ID-Tokens 106 mehr oder weniger gut approximiert, sind in einem geschützten Speicherbereich des elektronischen Speichers 118 gespeichert.

Der ID-Token 106 hat ferner einen Prozessor 128, insbesondere einen Mikroprozessor oder Microcontroller, der mit dem Speicher 118 eine bauliche Einheit bilden kann, insbesondere auf demselben Chip integriert sein kann. Der Prozessor 128 dient zur Ausführung von Programminstruktionen 131, die die Ausführung der den ID-Token 106 betreffenden Schritte eines oder mehrerer kryptografischer Protokolle implementieren. Zur Signierung eines Datensatzes 192 dient der Prozessor 128 ferner zur Ausführung von Programminstruktionen 132, durch die eine Signatur eines Zertifikats 167 erzeugt wird.

Der ID-Token 106 hat ferner eine Kommunikationsschnittstelle 108 zur Kommunikation mit dem Lesegerät 101. Bei dem Lesegerät 101 kann es sich um ein Peripheriegerät des Nutzer-Computersystems 100 oder um einen integralen baulichen Bestandteil des Nutzer-Computersystems 100 handeln. Das Lesegerät 101 kann über einen oder mehrere Kanäle verfügen, sodass es gleichzeitig eine Kommunikationsverbindung zu dem ID-Token 106 und einem Sicherheitstoken 156 aufbauen kann. Im Weiteren wird aber ohne Beschränkung der Allgemeinheit davon ausgegangen, dass das Lesegerät 101 nur mit dem ID-Token 106 kommunizieren kann, sodass ein weiteres Lesegerät 158 des Nutzer-Computersystems 100 zur Kommunikation mit dem Sicherheitstoken 156 dient. Auch bei diesem weiteren Lesegerät 158 kann es sich um eine Peripheriekomponente des Nutzer-Computersystems 100 oder einen integralen Bestandteil des Nutzer-Computersystems 100 handeln.

Der Sicherheitstoken 156 hat einen elektronischen Speicher 159, in dem ein Berechtigungszertifikat 160 des Sicherheitstokens gespeichert ist. Das Berechtigungszertifikat 160 legt eine Schreibberechtigung für einen Schreibzugriff des Sicherheitstokens 156 auf den ID-Token 106 fest und beinhaltet einen öffentlichen Schlüssel eines asymmetrischen kryptografischen Schlüsselpaars zu dem ein privater Schlüssel 161 gehört. Der private Schlüssel 161 ist in einem geschützten Speicherbereich des Speichers 159 gespeichert.

Der Sicherheitstoken 156 hat einen Prozessor 162, wie zum Beispiel einen Mikroprozessor oder Microcontroller, der eine bauliche Einheit mit dem Speicher 159 bilden kann. Der Prozessor 162 dient zur Ausführung von Programminstruktionen 163 zur Durchführung derjenigen Schritte eines kryptografischen Protokolls, die den Sicherheitstoken 156 betreffen.

Der Prozessor 162 dient ferner zur Ausführung von Programminstruktionen 164 zur Erzeugung eines asymmetrischen kryptografischen Schlüsselpaars 166, für welches das Zertifikat 167 der Dokumenten-PKI 300 erzeugt werden soll. Der Prozessor 162 dient ferner zur Ausführung von Programminstruktionen 168, durch die eine Signatur erzeugt wirdZur Freischaltung dieser Signaturfunktion kann vorgesehen sein, dass der Nutzer 102 eine Signatur PIN eingeben muss.

Zur Kommunikation mit dem Lesegerät 158 hat der Sicherheitstoken 156 eine Kommunikationsschnittstelle 170.

Bei dem Computersystem 171 des elektronischen Systems gemäß Figur 1 kann es sich um ein ID-Provider-Computersystem oder ein Dienst-Computersystem handeln. Das Computersystem 171 hat ein Zertifikat 172, beispielsweise einer Berechtigungs-PKI 302 (vergleiche Figur 3). Das Zertifikat 172 beinhaltet eine Angabe der Anfangszeit TA von dessen Gültigkeitsdauer, wohingegen in dem ID-Token 106 die Zeitinformation TA' gespeichert ist.

Über das Lesegerät 101 des Nutzer-Computersystems 100 kann eine Kommunikationsverbindung zwischen dem ID-Token 106 und dem Computersystem 171 aufgebaut werden, sofern eine Verbindung des Nutzer-Computersystems 100 mit dem Netzwerk 116 möglich ist. Über diese Kommunikationsverbindung kann sich das Computersystem 171 gegenüber dem ID-Token 106 authentifizieren und seine Berechtigung nachweisen, indem es sein Zertifikat 172 über diese Kommunikationsverbindung an den ID-Token 106 überträgt. Der ID-Token 106 empfängt so auch die Anfangszeit TA des Zertifikats 172.

Wenn die Anfangszeit TA des Zertifikats 172 nach der in dem ID-Token 106 gespeicherten Zeitinformation TA' 107 liegt, ersetzt der Prozessor 128 durch einen Zugriff auf den elektronischen Speicher 118 die Zeitinformation TA' durch die aktuellere Zeitinformation, das heißt die Anfangszeit TA. Auf diese Art und Weise wird bei aufeinanderfolgenden Authentifizierungen externer Computersysteme die Zeitinformation 107 wiederholt aktualisiert, sodass die in dem ID-Token gespeichert Zeitinformation 107 das aktuelle Datum mehr oder weniger gut approximiert. Zur Aktualisierung der Zeitinformation 107 kann entsprechend WO 2008/071627 A1 verfahren werden. Hierzu kann auch das Berechtigungszertifikat 160 oder das Berechtigungszertifikat eines anderen Sicherheitstokens verwendet werden; eine Verbindung über das Netzwerk 116 ist also nicht zwingend.

Zur Erzeugung des Zertifikats 167 wird beispielsweise wie folgt vorgegangen:
1. Der Nutzer 102 bringt den ID-Token 106 in die Reichweite des Lesegeräts 101 und den Sicherheitstoken 156 in die Reichweite des Lesegeräts 158, wobei der Aufbau einer Verbindung zwischen dem Nutzer-Computersystem 100 und dem Netzwerk 116 nicht erforderlich ist. Die Erzeugung des Zertifikats kann also auch dann erfolgen, wenn sich das Nutzer-Computersystem 100 außerhalb der Reichweite des Netzwerks 116 befindet oder der Aufbau einer Netzwerkverbindung aus anderen technischen Gründen nicht möglich oder nicht erwünscht ist.
2. Der Nutzer 102 authentifiziert sich gegenüber dem ID-Token 106, beispielsweise durch Eingabe einer ersten PIN, die dem ID-Token 106 zugeordnet ist. Hierzu gibt der Nutzer 102 seine erste PIN beispielsweise in das Lesegerät 101 ein, sofern dieses über eine eigene Tastatur verfügt, oder über eine Tastatur des Nutzer-Computersystems 100. Durch Ausführung eines kryptografischen Protokolls wird die erste PIN dann von dem ID-Token 106 verifiziert, beispielsweise indem die eingegebene erste PIN von dem Lesegerät 101 bzw. dem Nutzer-Computersystem 100 zu dem ID-Token 106 übertragen wird, und die eingegebene erste PIN mit einem gespeicherten Referenzwert verglichen wird, um die Validität der ersten PIN zu überprüfen.
   Vorzugsweise erfolgt die Authentifizierung des Nutzers gegenüber dem ID-Token mittels einer "Fernüberprüfung", worunter hier jedes Verfahren verstanden wird, bei dem die zu überprüfende PIN nicht in den ID-Token unmittelbar eingegeben wird, um sie mit dem dort gespeicherten Referenzwert auf Übereinstimmung zu prüfen, sondern bei dem die Überprüfung mittels eines das Lesegerät und den ID-Token involvierenden Protokolls erfolgt, bei dem die PIN, die in das Lesegerät eingegeben wird, nicht an den ID-Token übertragen werden muss. Entsprechende Protokolle sind an sich aus dem Stand der Technik bekannt, wie zum Beispiel Strong Password Only Authentication Key Exchange (SPEKE), Diffie-Hellman Encripted Key Exchange (DH-EKE), Bellovin-Merritt Protokoll oder Password Authenticated Connection Establishment (PACE). Das SPEKE-Protokoll ist beispielsweise bekannt aus www.jablon.org/speke97.html, US 6,792,533 B2 und US 7,139,917 B2. Unter anderem ebenfalls aus www.jablon.org/speke97.html ist das DH-EKE-Protokoll bekannt. Unter anderem aus US 5,241,599 ist das Bellovin-Merritt-Protokoll bekannt. Aus Technical Guideline TR-03110 des Bundesamt für Sicherheit in der Informationstechnik ist das PACE-Protokoll bekannt, welches sich besonders für elliptische Kurven-Kryptographie eignet, vergleiche hierzu auch DE 102007000587 A1 und DE 102013202001 A1. Vorzugsweise authentifiziert sich neben dem Nutzer auch das Lesegerät 101 gegenüber dem ID-Token 106, wobei auch ein gesicherter Übertragungskanal, das heißt ein sogenannter Secure Messaging-Kanal, zwischen dem ID-Token und dem Lesegerät aufgebaut werden kann, beispielsweise indem ein Session Key nach einem Diffie-Hellman-Protokoll zwischen dem ID-Token und dem Lesegerät vereinbart wird.
   In analoger Art und Weise authentifiziert sich der Nutzer 102 auch gegenüber seinem Sicherheitstoken 156, indem er in das Lesegerät 158 bzw. das Nutzer-Computersystem 100 seine zweite PIN eingibt, die von dem Sicherheitstoken 156 verifiziert wird.
3. Nach erfolgreicher Authentifizierung des Nutzers 102 gegenüber dem Sicherheitstoken 156 wird die Ausführung der Programminstruktionen 164 durch den Prozessor 162 gestartet, indem beispielsweise von dem Nutzer-Computersystem 100 ein entsprechendes Kommando über das Lesegerät 158 an den Sicherheitstoken 156 gesendet wird. Daraufhin erzeugen die Programminstruktionen 164 das kryptografische Schlüsselpaar 166 bestehend aus dem privaten Schlüssel 189 (vgl. Fig. 3) und dem öffentlichen Schlüssel 173, für welches das Zertifikat 167 erzeugt werden soll.
4. Der öffentliche Schlüssel 173 des Schlüsselpaars 166 wird dann von dem Sicherheitstoken 165 aus dem elektronischen Speicher 159 über die Schnittstelle 170, das Lesegerät 158, das Nutzer-Computersystem 100, das Lesegerät 101 und die Schnittstelle 108 in den elektronischen Speicher 118 des ID-Tokens 106 importiert, indem ein entsprechender Schreibzugriff durchgeführt wird. Die hierzu erforderliche Berechtigung zum Schreiben in den elektronischen Speicher 118 wird mithilfe des Berechtigungszertifikats 160 nachgewiesen.
   Zur Durchführung des Schreibzugriffs sendet das Nutzer-Computersystem 100 beispielsweise ein entsprechendes Kommando an den Sicherheitstoken 156, der daraufhin sein Berechtigungszertifikat 160 über die Schnittstelle 170 ausgibt. Das Berechtigungszertifikat 160 wird dann von dem Nutzer-Computersystem 100 an den ID-Token 106 weitergeleitet, welcher die Validität des Berechtigungszertifikats 106 und das Vorliegen der erforderlichen Schreibberechtigung überprüft. Je nach Ausführungsform kann der ID-Token 106 anhand der Zeitinformation 107 auch prüfen, ob eine Gültigkeitsdauer des Berechtigungszertifikats 106 abgelaufen ist.
   Beispielsweise aufgrund eines weiteren Kommandos des Nutzer-Computersystems 100 gibt der Sicherheitstoken 156 daraufhin den öffentlichen Schlüssel 173 des Schlüsselpaars 166 über seine Schnittstelle 170 aus, die von dem Nutzer-Computersystem 100 zu dem ID-Token 106 weitergeleitet wird, sodass der öffentliche Schlüssel 173 in den ID-Token 106 importiert und in dessen elektronischen Speicher 118 gespeichert wird.
5. Der Prozessor 128 des ID-Tokens 106 führt dann aufgrund der Speicherung des öffentlichen Schlüssels 173 in dem elektronischen Speicher 118 einen Lesezugriff durch, um den öffentlichen Schlüssel 173, die Zeitinformation 107 und zumindest eines der Attribute 124 zu lesen.
6. Der Prozessor 128 erzeugt dann aus dem öffentlichen Schlüssel 173, der Zeitinformation 107 und dem zumindest einen der Attribute 124 einen Datensatz 192.
7. Dieser Datensatz 192 wird dann durch den Prozessor 128 mit dem privaten Schlüssel 105 durch Ausführung der Programminstruktionen 132 signiert, sodass nunmehr in dem ID-Token 106 das Zertifikat 167, das heißt der signierte Datensatz 192, vorliegt.
8. Das Zertifikat 167 wird dann über die Schnittstelle 108 des ID-Tokens 106 ausgegeben und beispielsweise über das Nutzer-Computersystem 100 an den Sicherheitstoken 156 weitergeleitet, um es in dessen elektronischen Speicher 159 zu speichern.

Im Weiteren kann der Nutzer 102 seinen Sicherheitstoken 156 beispielsweise für die Erzeugung von Signaturen mit seinem Zertifikat 167 verwenden.

Nach Ausführungsformen der Erfindung wird in dem oben genannten Schritt 2. ein Kanal mit Ende-zu-Ende-Verschlüsselung zwischen dem ID-Token 106 und dem Sicherheitstoken 156 aufgebaut, beispielsweise aufgrund der Durchführung eines kryptografischen Protokolls, durch welches ein symmetrischer Session Key zwischen dem ID-Token 106 und dem Sicherheitstoken 156 vereinbart wird. Zum Schutz gegen Manipulationen wird der öffentliche Schlüssel 173 durch den Schreibzugriff des Sicherheitstokens 156 über diesen Kanal mit Ende-zu-Ende-Verschlüsselung zu dem ID-Token 106 übertragen.

Beispielsweise erfolgt nach der erfolgreichen Authentifizierung des Nutzers sowohl gegenüber dem ID-Token als auch gegenüber dem Sicherheitstoken eine gegenseitige Authentifizierung des ID-Tokens 106 und des Sicherheitstokens 156 unter Verwendung des Zertifikats 103 der Dokumenten-PKI 300 bzw. des Berechtigungszertifikats 160 der Berechtigungs-PKI 302. Hierbei wird dann auch der symmetrischer Session Key für die Ende-zu-Ende-Verschlüsselung vereinbart.

Alternativ oder zusätzlich kann zur Sicherung der Übertragung des öffentlichen Schlüssels 173 von dem Sicherheitstoken 156 zu dem ID-Token 106 der öffentliche Schlüssel 173 durch den Sicherheitstoken 156 mithilfe von dessen privaten Schlüssel 161 signiert werden. Vor dem Schreiben des öffentlichen Schlüssels 173 in den elektronischen Speicher 118 prüft der Prozessor 128 die Validität der Signatur des öffentlichen Schlüssels 173, sodass der öffentliche Schlüssel 173 nur dann in dem elektronischen Speicher 118 gespeichert wird, wenn diese Signatur valide ist.

Nach Ausführungsformen der Erfindung kann der Nutzer 102 über sein Nutzer-Computersystem 100 dasjenige oder diejenigen der Attribute 124 auswählen, die in das Zertifikat 167 eingehen sollen. Dies ist besonders vorteilhaft, da der Nutzer 102 so selbst festlegen kann, welche Attribute er in dem Zertifikat 167 für Dritte preisgeben möchte. Im Sinne der Datensparsamkeit kann der Nutzer 102 dabei nur solche Attribute auswählen, die zur Ermöglichung einer gegebenen Anwendung zwingend erforderlich sind.

Zur Auswahl eines oder mehrerer der Attribute 124 gibt der Nutzer 102 eine entsprechende Auswahl an das Computersystem 100 ein, welches daraufhin ein Auswahlsignal generiert, welches über das Lesegerät 101 an den ID-Token 106 übertragen wird. Beispielsweise erfolgt die Übertragung der Auswahl an Attributen zusammen mit der PIN-Eingabe in dem o.g. Schritt 2.

Diese von dem Nutzer vorgenommene Auswahl wird in dem elektronischen Speicher 118 als Auswahlinformation gespeichert. Der Prozessor 128 greift dann in dem oben genannten Schritt 5 nur auf die in der Auswahlinformation 194 spezifizierten Attribute der Attribute 124 zu, um diese auszulesen und in dem Schritt 6 den Datensatz 192 damit zu erzeugen.

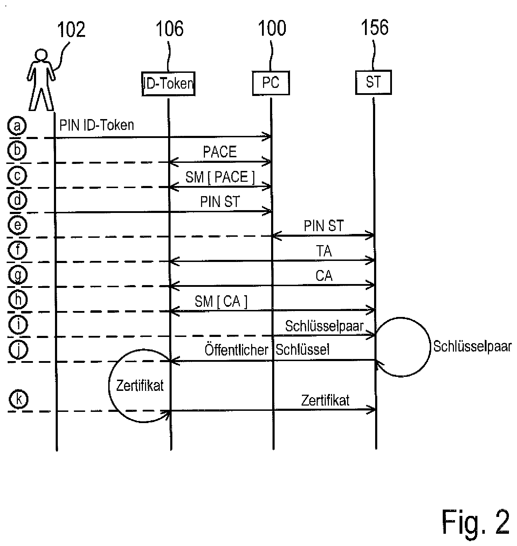

Die Figur 2 zeigt ein entsprechendes Ablaufdiagramm. In dem Schritt a gibt der Nutzer 102 die erste PIN zu seiner Authentifizierung gegenüber dem ID-Token 106 in das Nutzer-Computersystem 100, beispielsweise einen PC, ein. Daraufhin wird in dem Schritt b zum Beispiel ein Diffie-Hellman-Protokoll durchgeführt, beispielsweise das PACE-Protokoll, um die Validität der ersten PIN zu überprüfen. Hierdurch wird in dem Schritt c ein sicherer Kanal nach einem Secure-Messaging-Verfahren, beispielsweise als Ergebnis der Durchführung des PACE-Protokolls, zwischen dem ID-Token 106 und dem PC 100 aufgebaut, das heißt SM[PACE].

In dem Schritt d gibt der Nutzer 102 seine zweite PIN, das heißt die PIN ST für den Sicherheitstoken (ST) 156 in den PC 100 ein. Wenn man ohne Beschränkung der Allgemeinheit hier davon ausgeht, dass der ID-Token 106 über eine kontaktlose Schnittstelle und der Sicherheitstoken 156 über eine kontaktbehaftete Schnittstelle verfügt, so ist für die Verifikation der PIN ST eine Fernüberprüfung nicht wesentlich, sodass in der hier betrachteten Ausführungsform die zweite PIN, das heißt PIN ST, von dem PC 100 an den Sicherheitstoken 156 übertragen wird (Schritt e), sodass der Sicherheitstoken 156 die PIN ST auf Validität durch Vergleich mit entsprechenden Referenzdaten überprüft.

In dem Schritt f erfolgt dann eine sogenannte Terminal-Authentication (TA) des Sicherheitstokens 156 gegenüber dem ID-Token 106. Hierzu wird das Berechtigungszertifikat 160 des Sicherheitstokens 156 an den ID-Token 106 übermittelt, um den Sicherheitstoken 156 gegenüber dem ID-Token 106 zu authentifizieren und um eine Prüfung der Schreibberechtigung, die in dem Berechtigungszertifikat 160 definiert ist, durchzuführen. Ferner kann der ID-Token mit Hilfe seiner Zeitinformation 107 prüfen, ob das Berechtigungszertifikat 160 noch gültig ist.

Anschließend wird in dem Schritt g eine sogenannte Chip Authentication (CA) durchgeführt, das heißt es erfolgt eine Authentisierung des ID-Tokens 106 gegenüber dem Sicherheitstoken 156, indem das Zertifikat 103 an den Sicherheitstoken 156 übertragen und dort auf Validität überprüft wird.

In dem Schritt h kann dann - je nach Ausführungsform - mit einem Secure-Messaging-Verfahren ein Kanal mit Ende-zu-Ende-Verschlüsselung zwischen dem ID-Token 106 und dem Sicherheitstoken 156 aufgebaut werden, beispielsweise durch Vereinbarung eines symmetrischen Session Keys nach einem Diffie-Hellman-Verfahren.

In dem Schritt i sendet das Nutzer-Computersystem 100 ein Kommando an den Sicherheitstoken 156, woraufhin der Sicherheitstoken 156 das Schlüsselpaar 166 erzeugt.

In dem Schritt j wird der öffentliche Schlüssel 173 des Schlüsselpaars 166 über den in dem Schritt h aufgebauten Kanal von dem Sicherheitstoken 156 an den ID-Token 106 übertragen und in dem ID-Token 106 gespeichert.

Daraufhin erzeugt der ID-Token 106 das Zertifikat 167, welches in dem Schritt k beispielsweise über den in dem Schritt h aufgebauten Kanal von dem ID-Token an den Sicherheitstoken 156 übertragen wird, um das Zertifikat 167 in dem elektronischen Speicher 159 zu speichern.

Die Figur 3 zeigt eine Dokumenten-PKI 300. Diese hat ein Wurzelzertifikat C.CSCA sowie davon abgeleitete Zertifikate C.DS, die bei der Produktion des ID-Tokens 106 zum Signieren von Daten, die in dem elektronischen Speicher 118 des ID-Tokens 106 bei der Personalisierung gespeichert werden, verwendet werden. Die von einer Signiervorrichtung, d.h. dem sogenannten Document-Signer (DS) einer Personalisierungsanlage bei der Produktion des ID-Tokens 106 zum Signieren von Daten verwendeten Zertifikate C.DS sind öffentlich abrufbar und über die Dokumenten-PKI 300 mithilfe des Wurzelzertifikats C.CSCA verifizierbar.

Die Figur 3 zeigt ferner eine Berechtigungs-PKI 302, wobei mehrere solcher Berechtigungs-PKIen vorhanden sein können. Die Figur 3 zeigt exemplarisch den öffentlichen Schlüssel PuK.CVCA.xy der Berechtigungs-PKI 302 mit dem Wurzelzertifikat C.CVCA.xy.

Das Berechtigungszertifikat 160 des Sicherheitstokens 156 gehört zu dieser Berechtigungs-PKI 302. Dem Berechtigungszertifikat 160 ist das Schlüsselpaar bestehend aus dem privaten Schlüssel 161 PrK.T.AUT und dem dazugehörigen Schlüssel PuK.T.AUT 174 zugeordnet.

In dem elektronischen Speicher 159 des Sicherheitstokens 156 kann ferner ein Sektorenschlüssel 176 PuK.T.Sector gespeichert sein, wobei es sich hierbei um einen öffentlichen Schlüssel handelt, der für mehrere Sicherheitstoken 156, die einen "Sektor" bilden, identisch ist.

Zu dem privaten Schlüssel 105 PrK.ICC.AUT des ID-Tokens 106 gehört hier der entsprechende öffentliche Schlüssel 178 PuK.ICC.AUT, der von dem Document-Signer DS signiert ist, und im ID-Token 106 gespeichert ist. Beispielsweise ist der öffentliche Schlüssel 178 PuK.ICC.AUT in der Datei 103 "CardSecurity" enthalten, die auch das Zertifikat 103 beinhaltet oder mit diesem identisch ist. Beispielsweise ist beim elektronischen Personalausweis der Bundesrepublik Deutschland die Datei "CardSecurity" signiert, also selbst das Zertifikat 103. Ferner kann der öffentliche Schlüssel 180 PuK.CVCA.xy der Berechtigungs-PKI 302 bei der Personalisierung in dem elektronischen Speicher 118 des ID-Tokens 106 gespeichert werden, wodurch ein "Vertrauensanker" gebildet und die Verifikation des Berechtigungszertifikats 160 ermöglicht wird.

Ferner können in dem geschützten Speicherbereich des ID-Tokens 106 weitere private Schlüssel 182 und 184, nämlich PrK.ICC.SD bzw. PrK.ICC.RI gespeichert sein, die beispielsweise in dem Protokoll Restricted Identification (RI) angewendet werden können.

Bei der Nutzung des ID-Tokens 106 wird der Schlüssel 105 in dem Protokoll Chip Authentication (CA) verbunden mit dem Prüfen der Signatur der Datei Card Security verwendet, damit ein Terminal, hier der Sicherheitstoken 156, den ID-Token 106 als echt erkennen kann. Der Schlüssel 105 kann für eine Serie von ID-Token 106 gleich sein, sodass aus diesem Schlüssel 105 keine Rückschlüsse auf die Identität oder die Eigenschaften des Nutzers 102 getroffen werden können.

Der ID-Token 106 kann die Berechtigung eines Terminals, hier des Sicherheitstokens 156, in dem Protokoll Terminal Authentication (TA) mithilfe des Schlüssels 180 verifizieren. Dabei wird die Zeitinformation 107 zur Verifikation des Berechtigungszertifikats 160 benutzt, nämlich um zu prüfen, ob der Nutzungszeitraum des Berechtigungszertifikats 160 noch nicht abgelaufen ist.

Der Sektorenschlüssel 176 ist in dem Berechtigungszertifikat 160 verankert und durch die Berechtigungs-PKI 302 festgelegt. Beispielsweise ist hierzu der Sektorenschlüssel 176 oder ein davon abgeleiteter Wert, wie zum Beispiel ein Hash-Wert des Sektorenschlüssels 176, in dem Berechtigungszertifikat 160 beinhaltet.

Durch eine kryptographische Verknüpfung, z.B. durch Punktmultiplikation auf einer elliptischen Kurve, des Schlüssels 182 oder alternativ des Schlüssels 184 mit dem Sektorenschlüssel 176 wird ein Identifikator, z.B. den sog. RI, berechnet.

Ferner können die aus dem Sektorenschlüssel 176 und den Schlüsseln 182 und 184 berechneten Identifikatoren zum Sperren des Sicherheitstokens 156 verwendet werden, indem diese Identifikatren in die Zertifikate 167 eingebracht werden und im Fall einer Sperrung diese Identifikatoren von einem Sperrdienst in eine Sperrliste 186 eingetragen werden, beispielsweise wenn der Nutzer 102 den Verlust des Sicherheitstokens 156 meldet.

In dem ID-Token 106 kann zusätzlich zu dem privaten Schlüssel 105 ein weiterer privater Schlüssel 187 PrK.ICC.SC gespeichert sein, dessen öffentlicher Schlüssel 188 PuK.ICC.SC von dem Document-Signer der Dokumenten-PKI 300 beispielsweise als Teil der Datei 103 Card Security signiert ist. Je nach Ausführungsform kann dieser zusätzliche private Schlüssel 187 anstelle des privaten Schlüssels 105 für die Signierung des Zertifikats 167 von dem ID-Token 106 verwendet werden.

In der Ausführungsform gemäß Figur 3 beinhaltet das Schlüsselpaar 166 den öffentlichen Schlüssel 173 PuK.T.Sign und den dazugehörigen privaten Schlüssel 189 PrK.T.Sign. Durch Übertragung des öffentlichen Schlüssels 173 über den Kanal 190 mit Ende-zu-Ende-Verschlüsselung (vgl. auch Fig. 1) wird der ID-Token 106 dazu veranlasst, das Zertifikat 167 C.T.Sign zu erzeugen, indem der ID-Token 106 den Datensatz 192 generiert, der zumindest den öffentlichen Schlüssel 173, die Zeitinformation 107 sowie die ausgewählten Attribute beinhaltet, und welcher dann je nach Ausführungsform mit dem privaten Schlüssel 105 oder mit dem privaten Schlüssel 106 signiert wird. Vorzugsweise wird vor dem Signieren der Datensatz 192 formatiert, beispielsweise um ein CVC nach ISO/IEC 7816-8 oder ein X.509-Zertifikat nach ITU-X.509 oder einem anderen vorgegebenen Format zu erzeugen. Zu den ausgewählten Attributen können auch ein oder mehrere nachträglich in den ID-Token geladene Attribute 198 gehören, beispielsweise gemäß DE 10 2015 200 313 nachgeladene Attribute.

Im Ergebnis wird für den Nutzer 102 ein Zertifikat 167 erzeugt, dessen dazugehöriger private Schlüssel 189 auf dem Sicherheitstoken 156 gespeichert ist, wobei das Zertifikat 167 nur die von dem Nutzer 102 ausgewählten der Attribute 124 beinhalten kann. Das Zertifikat 167 kann über die Dokumenten-PKI 300 verifiziert werden, da das Zertifikat 167 mit dem privaten Schlüssel 105 oder 106 signiert ist und der dazugehörige öffentliche Schlüssel 178 bzw. 188 von dem DS beispielsweise in der Datei 103 Card Security signiert ist. Dem DS wiederum kann vertraut werden, weil dessen Zertifikat C.DS von dem Wurzelzertifikat C.CSCA abhängt.

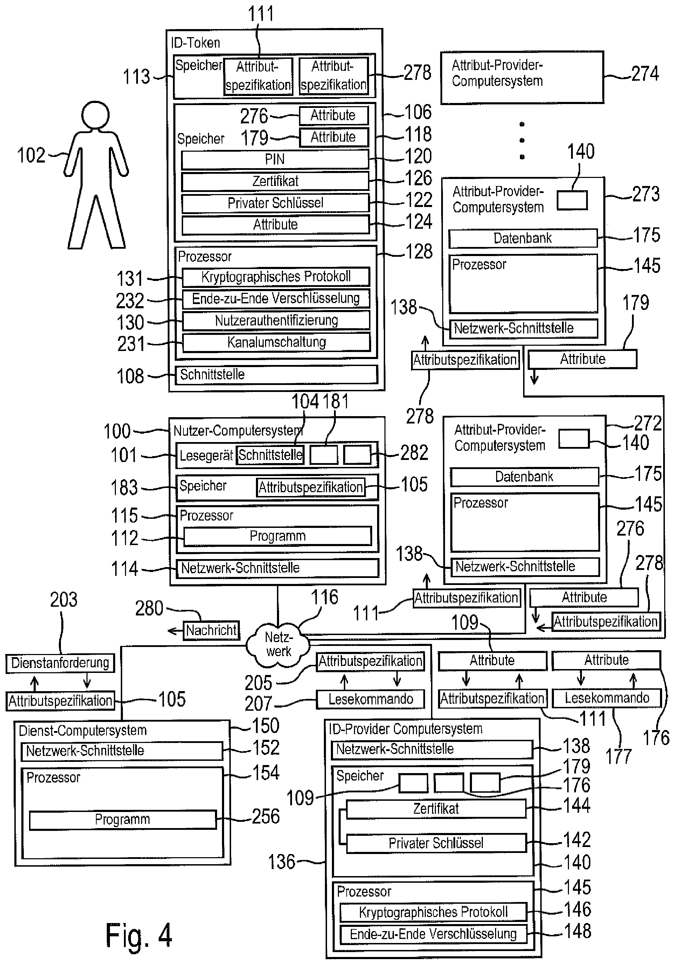

Die Figur 4 zeigt eine Weiterbildung der o.g. Ausführungsformen. Insbesondere zeigt die Fig. 4 das Nutzer-Computersystem 100 des Nutzers 102 (vgl. auch Fig. 1 und 2). Das Nutzer-Computersystem 100 hat das Lesegerät 101 mit einer Schnittstelle 104 zur Kommunikation mit einem ID-Token 106, der eine entsprechende Schnittstelle 108 aufweist.

Das Nutzer-Computersystem 100 hat zumindest einen Prozessor 115 zur Ausführung von Programminstruktionen 112 sowie eine Netzwerk-Schnittstelle 114 zur Kommunikation über das Netzwerk 116. Bei dem Netzwerk 116 kann es sich um ein Computernetzwerk, wie zum Beispiel das Internet, handeln.

Der ID-Token 106 hat in Weiterbildung der o.g. Ausführungsformen (vgl. insbesondere Fig. 1 und 2) einen elektronischen Speicher 118 mit geschützten Speicherbereichen. Der geschützte Speicherbereich 120 dient zur Speicherung eines Referenzwerts, der für die Authentifizierung des Nutzers 102 gegenüber dem ID-Token 106 benötigt wird. Bei diesem Referenzwert handelt es sich beispielsweise um eine Kennung, insbesondere eine so genannte Personal Identification Number (PIN), oder um Referenzdaten für ein biometrisches Merkmal des Nutzers 102, welches für die Authentifizierung des Nutzers gegenüber dem ID-Token 106 verwendet werden kann.

Der geschützte Bereich 122 dient zur Speicherung des privaten Schlüssels 105 und ein weiterer geschützter Speicherbereich dient zur Speicherung von Attributen 124 zum Beispiel des Nutzers 102, wie zum Beispiel dessen Name, Wohnort, Geburtsdatum, Geschlecht, und/oder von Attributen, die den ID-Token selbst betreffen, wie zum Beispiel die Institution, die den ID-Token erstellt oder ausgegeben hat, die Gültigkeitsdauer des ID-Tokens, einen Identifikator des ID-Tokens, wie zum Beispiel eine Passnummer oder eine Kreditkartennummer.

Der elektronische Speicher 118 kann ferner einen Speicherbereich 126 zur Speicherung des Zertifikats 103 aufweisen. Das Zertifikat 103 beinhaltet einen öffentlichen Schlüssel, der dem in dem geschützten Speicherbereich 122 gespeicherten privaten Schlüssel 105 zugeordnet ist. Das Zertifikat kann nach einem Public Key Infrastruktur (PKI) Standard erstellt worden sein, beispielsweise nach dem X.509 Standard.

Der ID-Token 106 hat einen Prozessor 128. Der Prozessor 128 dient zur Ausführung von Programminstruktionen 130, 232 und 131. Die Programminstruktionen 130 dienen zur Nutzerauthentifizierung, d.h. zur Authentifizierung des Nutzers 102 gegenüber dem ID-Token.

Bei einer Ausführungsform mit PIN gibt der Nutzer 102 seine PIN zu seiner Authentifizierung ein, beispielsweise in das Nutzer-Computersystem 100. Durch Ausführung der Programminstruktionen 130 wird dann auf den geschützten Speicherbereich 120 zugegriffen, um die eingegebene PIN mit dem dort gespeicherten Referenzwert der PIN zu vergleichen. Für den Fall, dass die eingegebene PIN mit dem Referenzwert der PIN übereinstimmt, gilt der Nutzer 102 als authentifiziert.

Alternativ wird ein biometrisches Merkmal des Nutzers 102 erfasst. Beispielsweise hat der ID-Token 106 hierzu einen Fingerabdrucksensor oder ein Fingerabdrucksensor ist an das Nutzer-Computersystem 100 angeschlossen. Die von dem Nutzer 102 erfassten biometrischen Daten werden durch Ausführung der Programminstruktionen 130 bei dieser Ausführungsform mit den in dem geschützten Speicherbereich 120 gespeicherten biometrischen Referenzdaten verglichen. Bei hinreichender Übereinstimmung der von dem Nutzer 102 erfassten biometrischen Daten mit den biometrischen Referenzdaten gilt der Nutzer 102 als authentifiziert.

Die Programminstruktionen 131 dienen zur Ausführung der den ID-Token 106 betreffenden Schritte eines kryptographischen Protokolls zur Authentifizierung eines ID-Provider-Computersystems 136 gegenüber dem ID-Token 106. Bei dem kryptographischen Protokoll kann es sich um ein Challenge-Response-Protokoll basierend auf einem symmetrischen Schlüssel oder einem asymmetrischen Schlüsselpaar handeln.

Beispielsweise wird durch das kryptographische Protokoll ein Extended Access Control-Verfahren implementiert, wie es für maschinenlesbare Reisedokumente (machine-readable travel documents - MRTD) von der internationalen Luftfahrtbehörde (ICAO) spezifiziert ist. Durch erfolgreiche Ausführung des kryptographischen Protokolls authentifiziert sich das ID-Provider-Computersystem 136 gegenüber dem ID-Token und weist dadurch seine Leseberechtigung zum Lesen der in dem geschützten Speicherbereich gespeicherten Attribute 124 nach. Die Authentifizierung kann auch gegenseitig sein, d.h. auch der ID-Token 106 muss sich dann gegenüber dem ID-Provider-Computersystem 136 nach demselben oder einem anderen kryptographischen Protokoll authentifizieren.

Die Programminstruktionen 232 dienen zur Ende-zu-Ende-Verschlüsselung von zwischen dem ID-Token 106 und dem ID-Provider-Computersystem 136 übertragenen Daten, zumindest aber der von dem ID-Provider-Computersystem 136 aus dem geschützten Speicherbereich ausgelesenen Attribute 124. Für die Ende-zu-Ende-Verschlüsselung kann ein symmetrischer Schlüssel verwendet werden, der beispielsweise anlässlich der Ausführung des kryptographischen Protokolls zwischen dem ID-Token 106 und dem ID-Provider-Computersystem 136 vereinbart wird.

Alternativ zu der in der Figur 4 dargestellten Ausführungsform kann das Nutzer-Computersystem 100 mit seiner Schnittstelle 104 nicht unmittelbar mit der Schnittstelle 108 kommunizieren, sondern über ein an die Schnittstelle 104 als Peripheriegerät angeschlossenes Lesegerät 101 für den ID-Token 106. Über dieses Lesegerät, wie zum Beispiel einen so genannten Klasse 2-Chipkarten-Terminal, kann auch die Eingabe der PIN erfolgen.

Das ID-Provider-Computersystem 136 hat eine Netzwerk-Schnittstelle 138 zur Kommunikation über das Netzwerk 116. Das ID-Provider-Computersystem 136 hat ferner einen Speicher 140, in dem ein privater Schlüssel 142 des ID-Provider-Computersystems 136 sowie das entsprechende Zertifikat 144 gespeichert ist. Auch bei diesem Zertifikat kann es sich beispielsweise um ein Zertifikat nach einem PKI-Standard, wie zum Beispiel X.509 handeln.

Das ID-Provider-Computersystem 136 hat ferner zumindest einen Prozessor 145 zur Ausführung von Programminstruktionen 146 und 148. Durch Ausführung der Programminstruktionen 146 werden die das ID-Provider-Computersystem 136 betreffende Schritte des kryptographischen Protokolls ausgeführt. Insgesamt wird also das kryptographische Protokoll durch Ausführung der Programminstruktionen 131 durch den Prozessor 128 des ID-Tokens 106 sowie durch Ausführung der Programminstruktionen 146 durch den Prozessor 145 des ID-Provider-Computersystems 136 implementiert.

Die Programminstruktionen 148 dienen zur Implementierung der Ende-zu-Ende-Verschlüsselung auf Seiten des ID-Provider-Computersystems 136, beispielsweise basierend auf dem symmetrischen Schlüssel, der anlässlich der Ausführung des kryptographischen Protokolls zwischen dem ID-Token 106 und dem ID-Provider-Computersystem 136 vereinbart worden ist. Prinzipiell kann jedes an sich vor bekannte Verfahren zur Vereinbarung des symmetrischen Schlüssels für die Ende-zu-Ende-Verschlüsselung verwendet werden, wie zum Beispiel ein Diffie-Hellman-Schlüsselaustausch.

Das ID-Provider-Computersystem 136 befindet sich vorzugsweise in einer besonders geschützten Umgebung, insbesondere in einem so genannten Trust-Center, sodass das ID-Provider-Computersystem 136 in Kombination mit der Notwendigkeit der Authentifizierung des Nutzers 102 gegenüber dem ID-Token 106 den Vertrauensanker für die Authentizität der aus dem ID-Token 106 ausgelesenen Attribute bildet.

Ein Dienst-Computersystem 150 kann zur Entgegennahme einer Bestellung oder eines Auftrags für eine Dienstleistung oder ein Produkt, insbesondere eine Online-Dienstleistung, ausgebildet sein. Beispielsweise kann der Nutzer 102 online über das Netzwerk 116 ein Konto bei einer Bank eröffnen oder eine andere Finanz- oder Bankdienstleistung in Anspruch nehmen. Das Dienst-Computersystem 150 kann auch als Online-Warenhaus ausgebildet sein, sodass der Benutzer 102 beispielsweise online ein Mobiltelefon oder dergleichen erwerben kann. Ferner kann das Dienst-Computersystem 150 auch zur Lieferung von digitalen Inhalten ausgebildet sein, beispielsweise für den Download von Musik- und/oder Videodaten oder als Behördenserver für eine eGovernment Anwendung.

Das Dienst-Computersystem 150 hat hierzu eine Netzwerk-Schnittstelle 152 zur Verbindung mit dem Netzwerk 116. Ferner hat das Dienst-Computersystem 150 zumindest einen Prozessor 154 zur Ausführung von Programminstruktionen 256. Durch Ausführung der Programminstruktionen 256 werden beispielsweise dynamische HTML-Seiten generiert, über die der Nutzer 102 seinen Auftrag oder seine Bestellung eingeben kann.

Je nach der Art des beauftragten oder bestellten Produkts oder der Dienstleistung muss das Dienst-Computersystem 150 Attribute des Nutzers 102 und/oder dessen ID-Token 106 anhand eines oder mehrerer vorgegebener Kriterien überprüfen. Nur wenn diese Prüfung bestanden wird, wird die Bestellung oder der Auftrag des Nutzers 102 entgegengenommen und/oder ausgeführt.

Beispielsweise ist es für die Eröffnung eines Bankkontos oder den Kauf eines Mobiltelefons mit einem dazugehörigen Vertrag erforderlich, dass der Nutzer 102 seine Identität gegenüber dem Dienst-Computersystem 150 offenbart, und dass diese Identität überprüft wird. Im Stand der Technik muss der Nutzer 102 hierzu beispielsweise seinen Personalausweis vorlegen. Dieser Vorgang wird durch das Auslesen der digitalen Identität des Nutzers 102 aus seinem ID-Token 106 ersetzt.

Je nach Anwendungsfall können für die Erbringung des Dienstes weitere Attribute erforderlich sein, die in dem ID-Token zunächst nicht vorhanden sind. Hierzu kann das in der Figur 1 gezeigte Computersystem ein oder mehrere Attribut-Provider-Computersysteme 272, 273, 274, ... aufweisen. Diese können prinzipiell gleich aufgebaut sein wie das ID-Provider-Computersystem und verfügen über zusätzliche Funktionalitäten zum Lesen oder Generieren von Attributen sowie zum Schreiben von Attributen und erforderlichenfalls Attributspezifikationen in den ID-Token.

Zur Inanspruchnahme eines von dem Dienst-Computersystem 150 zur Verfügung gestellten Dienstes wird beispielsweise wie folgt vorgegangen:
a) Der Nutzer 102 baut mithilfe seines Nutzer-Computersystems 100 eine Internetsession über das Netzwerk 116 zu dem Dienst-Computersystem 150 auf. Über diese Internetsession wird eine Dienstanforderung 203 von dem Nutzer-Computersystem 100 an das Dienst-Computersystem 150 übertragen, womit der Nutzer 102 die Erbringung eines Dienstes des Dienst-Computersystems 150 anfordert. Das Dienst-Computersystem 150 antwortet auf diese Dienstanforderung 203 mit einer ersten Attributspezifikation 205, die diejenigen Attribute spezifiziert, die für die Erbringung des mit der Dienstanforderung 203 angeforderten Dienstes zu erfüllen sind. Diese erste Attributspezifikation spezifiziert beispielsweise eine Anzahl von M Attributen A1, A2, A3, ... AM.
b) Beispielsweise wird die Attributspezifikation 205 in einem Speicher 183 des Nutzer-Computersystems 100 zwischengespeichert. Aufgrund des Empfangs der Attributspezifikation 205 durch das Nutzer-Computersystem 100 wird der Nutzer 102 dazu aufgefordert, sich gegenüber dem ID-Token 106 zu authentifizieren. Hierzu gibt der Nutzer 102 seine PIN zum Beispiel über das Lesegerät 101 oder eine Tastatur des Nutzer-Computersystems 100 ein. Ferner baut das Nutzer-Computersystem 100 zu dem ID-Provider-Computersystem 136 eine weitere Internetsession über das Netzwerk 116 auf, über die sich das ID-Provider-Computersystem 136 gegenüber dem Nutzer-Computersystem 100 authentifiziert, und zwar unter Verwendung des Zertifikats 144.
   Vorzugsweise erfolgt eine gegenseitige Authentifizierung des ID-Tokens 106 und des ID-Provider-Computersystems 136 bzw. des jeweiligen Attribut-Provider-Computersystems unter Verwendung der Zertifikate 126 und 144, das heißt eine sogenannte CA und eine TA. Hierbei wird auch ein Session Key vereinbart, mit dem der erste gesicherte Übertragungskanal mit Ende-zu-Ende-Verschlüsselung zwischen dem ID-Token 106 und dem ID-Provider-Computersystem über das Nutzer-Computersystem 100 und das Netzwerk 116 aufgebaut wird. Ferner leitet das Nutzer-Computersystem 100 die Attributspezifikation 205 über die mit dem ID-Provider-Computersystem 136 bestehende Session an das ID-Provider-Computersystem 136 weiter.
c) Das ID-Provider-Computersystem 136 antwortet auf die erste Attributspezifikation 205 mit einem Lesekommando 207 zum Lesen der in der ersten Attributspezifikation spezifizierten Attribute. Dieses Lesekommando 207 wird über den ersten gesicherten Übertragungskanal mit Ende-zu-Ende-Verschlüsselung von dem ID-Provider-Computersystem 136 an den ID-Token 106 übertragen. Der Prozessor 128 greift daraufhin auf den elektronischen Speicher 118 zu, um die Attribute gemäß der ersten Attributspezifikation 205 auszulesen. Im Weiteren wird ohne Beschränkung der Allgemeinheit davon ausgegangen, dass von den M Attributen gemäß der ersten Attributspezifikation 205 nur P Attribute A1, A2, A3, ..., AP vorhanden sind, wobei P < M. Auf das Lesekommando 207 antwortet der ID-Token 106 mit der Antwort 109, die die erste Teilmenge der in der ersten Attributspezifikation 205 spezifizierten Attribute, nämlich die Attribute A1, A2, A3, ..., AP beinhaltet. Die Antwort 109 wird über den ersten gesicherten Übertragungskanal von dem ID-Token 106 an das ID-Provider-Computersystem 136 übertragen.
d) Das ID-Provider-Computersystem 136 speichert die Antwort 109 mit der ersten Teilmenge der Attribute in seinem Speicher 140 und erzeugt eine zweite Attributspezifikation 111, welche die noch fehlenden Attribute spezifiziert, das heißt diejenigen der ersten Attributspezifikation 205 spezifizierten Attribute, die in der Antwort 109 nicht beinhaltet sind, das heißt hier die Attribute AP+1 bis AM. Die zweite Attributspezifikation 111 wird über den ersten gesicherten Übertragungskanal von dem ID-Provider-Computersystem 136 zu dem ID-Token 106 übertragen und dort gespeichert und kann bei Speicherung in dem nicht-flüchtigen oder flüchtigen Speicher eine bereits vorhandene Attributspezifikation ersetzen. Die Speicherung kann beispielsweise in einem flüchtigen Speicher 113 des IT-Tokens 106 erfolgen.
e) Das Nutzer-Computersystem 100 baut eine weitere Internetsession über das Netzwerk 116 mit dem Attribut-Provider-Computersystem 272 auf. Das Attribut-Provider-Computersystem 272 authentifiziert sich dann gegenüber dem ID-Token 106, wobei vorzugsweise eine gegenseitige Authentifizierung, das heißt eine CA und eine TA, durchgeführt werden. Hierbei wird ein zweiter gesicherter Übertragungskanal mit Ende-zu-Ende-Verschlüsselung mit einem Session Key zwischen dem ID-Token 106 und dem Attribut-Provider-Computersystem 272 über das Netzwerk 116 und das Nutzer-Computersystem 100 aufgebaut, wobei der erste gesicherte Übertragungskanal bestehen bleibt.
   Der Prozessor 128 dient zur Ausführung von Programminstruktionen 231 für die Kanalumschaltung, das heißt die Auswahl einer der gesicherten Übertragungskanäle, das heißt hier des ersten oder des zweiten gesicherten Übertragungskanals, für die externe Kommunikation. Aufgrund des Aufbaus des zweiten gesicherten Übertragungskanals wird durch Ausführung der Programminstruktionen 231 der zweite gesicherte Übertragungskanal von dem Prozessor 128 ausgewählt, über den der ID-Token 106 dann die zweite Attributspezifikation 111 an das Attribut-Provider-Computersystem 272 sendet.
f) Das Attribut-Provider-Computersystem 272 führt daraufhin einen Zugriff auf seine Datenbank 175 durch, um die Attribute gemäß der zweiten Attributspezifikation 111 zu lesen. Das Attribut-Provider-Computersystem 272 antwortet dann auf die Attributspezifikation 111 mit seiner Antwort 276, die die aus der Datenbank 175 gelesenen Attribute beinhaltet und sendet diese Antwort 276 über den zweiten gesicherten Übertragungskanal an den ID-Token 106, welcher die Antwort 276 mit diese Attributen mit seinem elektronischen Speicher 118 speichert, wodurch die nachgeladenen Attribute 198 (vgl. Fig. 3) resultieren.
g) Durch Ausführung der Programminstruktionen 231 schaltet der ID-Token 106 dann auf den ersten gesicherten Übertragungskanal zurück. Das ID-Provider-Computersystem 136 greift dann durch ein zweites Lesekommando 177 über den ersten gesicherten Übertragungskanal auf den ID-Token 106 zu und erhält als Antwort darauf von dem ID-Token 106 die Antwort 276 aus dem Speicher 118 mit den noch fehlenden Attributen.

Für den Fall, dass das Attribut-Provider-Computersystem 272 nicht auf sämtliche gemäß der zweiten Attributspezifikation 111 erforderlichen Attribute zugreifen kann, beispielsweise weil diese nicht sämtlich in der Datenbank 175 gespeichert sind, kann der oben genannte Vorgang iterativ unter Verwendung der weiteren Attribut-Provider-Computersysteme 273, 274, ... durchgeführt werden, und zwar so lange, bis sämtliche der Attribute gemäß der ersten Attributspezifikation 205 in dem Speicher 118 vorliegen oder eine andere Abbruchbedingung erreicht ist.

Falls das Attribut-Provider-Computersystem 272 nicht sämtliche der Attribute gemäß der zweiten Attributspezifikation 111 ermitteln kann, so generiert das Attribut-Provider-Computersystem 272 eine dritte Attributspezifikation 278. Wenn beispielsweise die Antwort 276 die Attribute AP+1 bis AQ beinhaltet mit Q < M, so werden in der dritten Attributspezifikation 278 die noch fehlenden Attribute AQ+1 bis AM spezifiziert. Diese dritte Attributspezifikation 278 wird von dem Attribut-Provider-Computersystem 272 über den zweiten gesicherten Übertragungskanal zu dem ID-Token 106 übertragen und ersetzt oder aktualisiert die in dem Speicher 113 gespeicherte zweite Attributspezifikation 111.

Anschließend wird dann nach vorheriger CA und TA ein dritter gesicherter Übertragungskanal zu dem Attribut-Provider-Computersystem 273 aufgebaut, welches die dritte Attributspezifikation 278 aus dem ID-Token 106 ausliest und darauf mit einer Antwort 179 antwortet, die die noch fehlenden Attribute gemäß der dritten Attributspezifikation 278 beinhaltet. Diese Antwort 179 wird über den dritten gesicherten Übertragungskanal von dem Attribut-Provider-Computersystem 273 an den ID-Token 106 übertragen und in dem Speicher 118 gespeichert.

Durch Ausführung der Programminstruktionen 231 wird dann wiederum auf den ersten gesicherten Übertragungskanal zurückgeschaltet, sodass aufgrund des zweiten Lesekommandos 177 in diesem Fall sowohl die Antwort 276 als auch die Antwort 179, die insgesamt die Attribute AP+1 bis AM beinhalten, an das ID-Provider-Computersystem 136 übertragen werden.

Falls seitens des Attribut-Provider-Computersystems 273 nicht sämtliche der Attribute gemäß der dritten Attributspezifikation 278 verfügbar sind, kann in analoger Art und Weise iterativ weiterverfahren werden, indem ein oder mehrere weitere Attribut-Provider-Computersysteme, wie zum Beispiel das Attribut-Provider-Computersystem 274, in den Ablauf eingebunden werden.

Das ID-Provider-Computersystem 136 verfügt nach einer erfolgreichen Durchführung der oben genannten Verfahrensschritte in seinem Speicher 140 über sämtliche der Attribute, die mit der ersten Attributspezifikation 205 angefordert worden sind. Das ID-Provider-Computersystem 136 generiert daraufhin eine Nachricht 280, die diese Attribute A1 bis AM beinhaltet, signiert diese Nachricht und sendet sie über das Netzwerk 116 an das Dienst-Computersystem 150, wobei dies über das Nutzer-Computersystem 100 erfolgen kann. Das Dienst-Computersystem 150 kann dann gegebenenfalls mithilfe der in der Nachricht 280 beinhalteten Attribute den mit der Dienstanforderung 203 angeforderten Dienst erbringen.

Die Attribut-Provider-Computersysteme 272, 273, 274 ... können analog zu dem ID-Provider-Computersystem 136 aufgebaut sein, das heißt sie verfügen jeweils über eine Netzwerk-Schnittstelle 138, einen Prozessor 145 zur Ausführung von Programminstruktionen 146, 148 und einen Speicher 140, in dem ein Zertifikat und ein privater Schlüssel gespeichert sind. Bei dem Zertifikat handelt es sich vorzugsweise um ein Berechtigungszertifikat, in dem jeweils eine Berechtigung für Lese- und Schreibzugriffe auf den ID-Token 106 spezifiziert ist.

Nach einer Ausführungsform der Erfindung werden die in der Antwort 276 bzw. 179 beinhalteten Attribute erst dann in dem Speicher 118 gespeichert, nachdem diese der Nutzer 102 zur Kenntnis nehmen konnte. Hierzu werden diese Attribute auf einem Display 181 angezeigt, welches zum Beispiel zu dem Lesegerät 101 gehört. Ferner kann beispielsweise auf dem Lesegerät 101 ein Bedienelement 282 vorhanden sein, über welches der Nutzer 102 eine Eingabe tätigen muss, um die Speicherung der in den Antworten 276 bzw. 179 beinhalteten Attribute in dem Speicher 118 zu genehmigen. Hierdurch erhält der Nutzer 102 eine Kontrollmöglichkeit bezüglich der möglicherweise seine Person betreffenden zusätzlichen Attribute in dem Speicher 118.

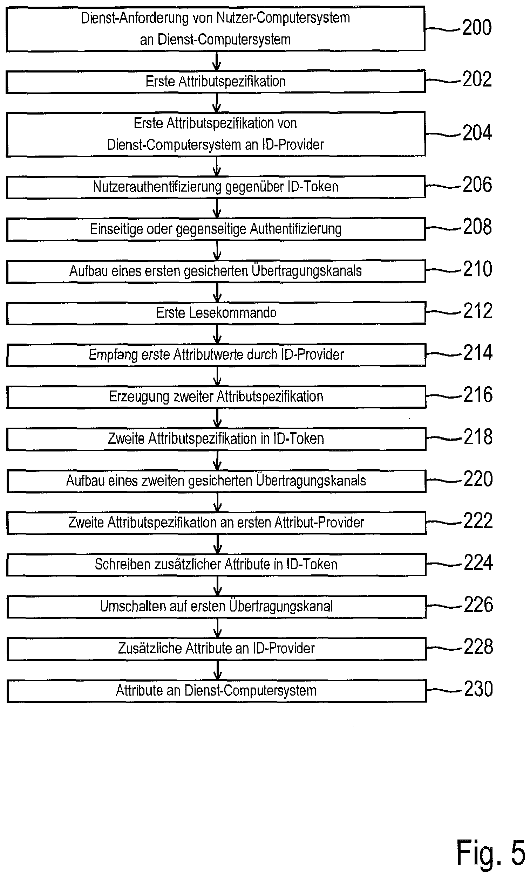

Die Figur 5 zeigt eine Ausführungsform eines entsprechenden erfindungsgemäßen Verfahrens. In dem Schritt 200 wird eine Dienstanforderung 203 von dem Nutzer-Computersystem 100 an das Dienst-Computersystem 150 gesendet. Das Dienst-Computersystem 105 erzeugt daraufhin eine Antwort mit der ersten Attributspezifikation 205 (Schritt 202), die in dem Schritt 204 an das ID-Provider-Computersystem 136 gesendet wird.

In dem Schritt 206 authentifiziert sich der Nutzer 102 gegenüber dem ID-Token 106 und es erfolgt in dem Schritt 208 eine einseitige oder gegenseitige Authentifizierung des ID-Tokens 106 und des ID-Provider-Computersystems 136, insbesondere mit einer CA und einer TA.

In dem Schritt 210 wird die erste gesicherte Verbindung aufgebaut, über welche das ID-Provider-Computersystem in dem Schritt 212 das erste Lesekommando 207 sendet. Auf das erste Lesekommando antwortet der ID-Token 106 in dem Schritt 214 mit den in der Antwort 109 beinhalteten Attributen A1 bis AP.

Daraufhin erzeugt das ID-Provider-Computersystem 136 in dem Schritt 216 die zweite Attributspezifikation 111, in der die noch fehlenden Attribute AP+1 bis AM spezifiziert sind und schreibt diese zweite Attributspezifikation 111 in dem Schritt 218 über den ersten gesicherten Übertragungskanal in den ID-Token 106, wo die Attributspezifikation 111 gespeichert wird.

Anschließend wird dann in dem Schritt 220 der zweite gesicherte Übertragungskanal zu dem Attribut-Provider-Computersystem 272 aufgebaut und die zweite Attributspezifikation 111 aus dem ID-Token 106 gelesen und zu dem Attribut-Provider-Computersystem 272 übertragen (Schritt 222).

Das Attribut-Provider-Computersystem 272 greift dann auf die laut zweiter Attributspezifikation 111 angeforderten Attribute zu, beispielsweise über einen Datenbankzugriff, und schreibt diese zusätzlichen Attribute, in dem betrachteten Beispielsfall die Attribute AP+1 bis AM in dem Schritt 224 über den zweiten gesicherten Übertragungskanal in den ID-Token 106.

Der ID-Token 106 schaltet dann auf den ersten gesicherten Übertragungskanal in dem Schritt 226 zurück, sodass die zuvor in dem Schritt 224 zusätzlich in den ID-Token 106 geschriebenen Attribute von dem ID-Provider-Computersystem 136 über diesen ersten gesicherten Übertragungskanal aus dem ID-Token 106 ausgelesen werden (Schritt 228). In dem Schritt 230 überträgt das ID-Provider-Computersystem 136 dann sämtliche der aus dem ID-Token 106 gelesenen Attribute an das Dienst-Computersystem 150, sodass dieses dann gegebenenfalls nach Prüfung der Attribute den angeforderten Dienst erbringen kann.

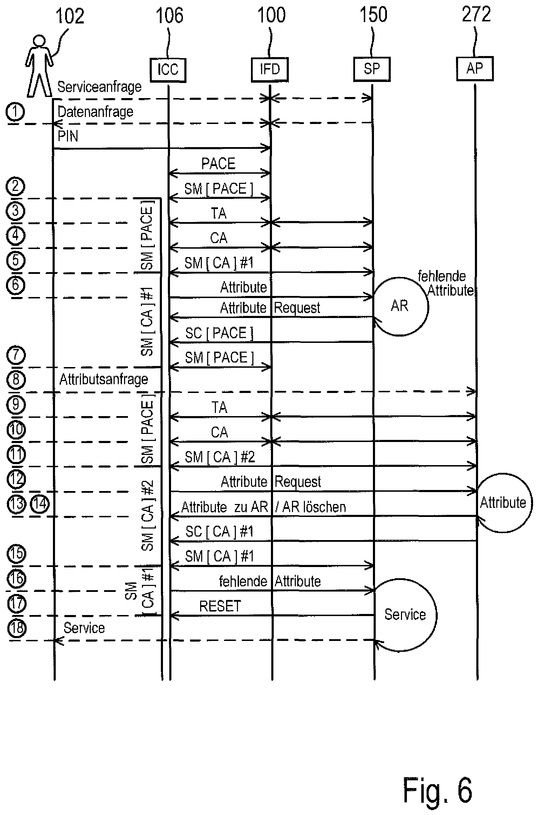

Die Figur 6 zeigt ein entsprechendes UML-Diagramm, wobei hier davon ausgegangen wird, dass das Dienst-Computersystem 150 das ID-Provider-Computersystem 136 beinhaltet.

In dem Schritt 1 wird durch den Nutzer 102 eine Serviceanfrage, das heißt eine Dienstanforderung 203, an das Dienst-Computersystem 150 gesendet, und zwar mithilfe des Nutzer-Computersystems 100. Das Dienst-Computersystem 150 antwortet darauf mit einer Datenanfrage, das heißt mit der ersten Attributspezifikation 205.

Daraufhin authentifiziert sich der Nutzer 102 gegenüber dem ID-Token 106, indem er seine PIN in das Nutzer-Computersystem 100, das heißt beispielsweise dessen Lesegerät 101, eingibt. Aufgrund der Ausführung beispielsweise des PACE-Protokolls wird die PIN verifiziert und in dem Schritt 2 wird mithilfe von PACE ein Secure Messaging-Kanal zwischen ID-Token und Nutzer-Computersystem, das heißt SM-[PACE], aufgebaut.

In dem Schritt 3 erfolgt dann auf dieser Basis eine TA des in dem Dienst-Computersystem 150 beinhalteten ID-Provider-Computersystems sowie in dem Schritt 4 eine CA des ID-Tokens 106 gegenüber dem ID-Provider-Computersystem.

In dem Schritt 5 wird dann der erste gesicherte Übertragungskanal zwischen dem ID-Token 106 und dem ID-Provider-Computersystem aufgebaut, nämlich SM-[CA]#1.

Die weitere Kommunikation in dem Schritt 6 verläuft dann über diesen ersten gesicherten Übertragungskanal, nämlich das Auslesen von Attributen aus dem ID-Token 106 gemäß der ersten Attributspezifikation 205 und das anschließende Schreiben der zweiten Attributspezifikation 111, d.h. ein Attribute Request (AR). Ferner kann durch das ID-Provider-Computersystem 136 ein Umschaltsignal SC-[PACE] erzeugt werden, welches einerseits durch die Programminstruktionen 231 seitens des ID-Tokens 106 verarbeitet wird und andererseits durch das Nutzer-Computersystem 100 verarbeitet wird, um den Übertragungskanal SM-[PACE] zwischen ID-Token und Nutzer-Computersystem zurückzuschalten.

In dem Schritt 8 kann optional eine Auswahl des Attribut-Provider-Systems 272 durch den Nutzer 102 erfolgen. Auf eine solche explizite Auswahl kann auch verzichtet werden, wenn das Nutzer-Computersystem 100 das zu kontaktierende Attribut-Provider-Computersystem bereits kennt, beispielsweise wenn der Nutzer 102 vorab mit der Lieferung von Attributen durch das Attribut-Provider-Computersystem 272 sein Einverständnis erklärt hat. Entsprechendes gilt für die Attributsanfrage 2 gemäß Fig. 5.

Die Schritte 9 und 10 werden dann analog zu den Schritten 3 und 4 auf der Basis von SM-[PACE] durchgeführt, und zwar für eine TA des Attribut-Provider-Computersystems 272 bzw. eine CA des ID-Tokens 106 gegenüber dem Attribut-Provider-Computersystem 272.

In dem Schritt 10 wird dann der zweite gesicherte Übertragungskanal SM-[CA] #2 aufgebaut, über den dann die weitere Kommunikation in den Schritten 12, 13 und 14 erfolgt:
In dem Schritt 12 liest das Attribut-Provider-Computersystem 272 die zweite Attributspezifikation 111 und liest dann die entsprechenden Attribute, beispielsweise durch einen Zugriff auf seine Datenbank 175. Das Attribut-Provider-Computersystem 272 schreibt dann diese zusätzlichen Attribute in den ID-Token 106 (Schritt 13) und löscht die dort gespeicherte zweite Attributspezifikation 111 (Schritt 14).

Ferner kann das Attribut-Provider-Computersystem 272 ein Umschaltsignal generieren, nämlich SC-[CA] #1, welches von den Programminstruktionen 231 verarbeitet wird, um den Übertragungskanal auf den ersten gesicherten Übertragungskanal SM-[CA]#1 in dem Schritt 15 zurückzuschalten. Alternativ kann das Attribut-Provider-Computersystem 272 ein Umschaltsignal generieren, nämlich SC-[PACE], welches von den Programminstruktionen 231 verarbeitet wird, um zunächst den Übertragungskanal SM[PACE] zwischen ID-Token und Nutzer-Computersystem zurückzuschalten. Das Nutzer-Computersystem kann dann ein Umschaltsignal generieren, nämlich SC-[CA] #1, welches von den Programminstruktionen 231 verarbeitet wird, um den Übertragungskanal auf den ersten gesicherten Übertragungskanal
SM-[CA]#1 in dem Schritt 15 zurückzuschalten.

Über diesen ersten gesicherten Übertragungskanal liest dann das ID-Provider-Computersystem in dem Schritt 16 die noch fehlenden Attribute, die in dem Schritt 13 von dem Attribut-Provider-Computersystem geschrieben worden sind und sendet optional in dem Schritt 17 ein Reset-Kommando, um hiermit den Vorgang des Lesens von Attributen aus dem ID-Token abzuschließen. In dem Schritt 18 kann dann das Dienst-Computersystem 150 mittels der zuvor aus dem ID-Token 106 gelesenen Attribute den gewünschten Dienst erbringen.
- Nachfolgend kann der Nutzer 102 seinen ID-Token mit den ein oder mehreren nachgeladenen Attributen 198 zur Erzeugung des Zertifikats 167 verwenden, und zwar auch dann, wenn keine Verbindung zu dem Netzwerk 116 zur Verfügung steht oder eine solche Verbindung nicht gewünscht ist, und zwar gemäß den Ausführungsformen nach Figuren 1, 2 oder 3. Durch die Möglichkeit des Nachladens von Attributen erhält der Nutzer 102 somit maximale Flexibilität hinsichtlich der Auswahl von Attributen für die Erzeugung von Zertifikaten 167 für unterschiedliche Anwendungsszenarien.

**Bezugszeichenliste**

| | | | |
|---|---|---|---|
| 100 | Nutzer-Computersystem | | |
| 101 | Lesegerät | | |
| 102 | Nutzer | | |
| 103 | Zertifikat | | |
| 105 | privater Schlüssel | | |
| 106 | ID-Token | | |
| 107 | Zeitinformation | | |
| 108 | Kommunikationsschnittstelle | | |
| 109 | Antwort | | |
| 111 | zweite Attributspezifikation | | |
| 112 | Programminstruktionen | | |
| 113 | flüchtiger Speicher | | |
| 114 | Netzwerkschnittstelle | 115 | Prozessor |
| 116 | Netzwerk | | |
| 118 | elektronischer Speicher | | |
| 120 | geschützter Speicherbereich | | |
| 122 | geschützter Speicherbereich | | |
| 124 | Attribute | | |
| 126 | Speicherbereich | 128 | Prozessor |
| 130 | Programminstruktionen | | |
| 131 | Programminstruktionen | | |
| 132 | Programminstruktionen | | |
| 134 | Programminstruktionen | | |
| 136 | ID-Provider-Computersystem | | |
| 138 | Netzwerkschnittstelle | | |
| 140 | Speicher | | |
| 142 | privater Schlüssel | | |
| 144 | Zertifikat | | |
| 145 | Prozessor | | |
| 146 | Programminstruktionen | | |
| 148 | Programminstruktionen | | |
| 149 | Programminstruktionen | | |
| 150 | Dienst-Computersystem | | |
| 152 | Netzwerkschnittstelle | | |
| 154 | Prozessor | 156 | Sicherheitstoken |
| 158 | Lesegerät | | |
| 159 | elektronischer Speicher | | |
| 160 | Berechtigungszertifikat | | |
| 161 | privater Schlüssel | | |
| 162 | Prozessor | | |
| 163 | Programminstruktionen | | |
| 164 | Programminstruktionen | | |
| 165 | Programminstruktionen | | |
| 166 | Schlüsselpaar | | |
| 167 | Zertifikat | | |
| 168 | Programminstruktionen | | |
| 170 | Kommunikationsschnittstelle | | |
| 171 | Computersystem | | |
| 172 | Zertifikat | | |
| 173 | Schlüssel | | |
| 174 | öffentlicher Schlüssel | | |
| 175 | Datenbank | | |
| 176 | Sektorenschlüssel | | |
| 177 | Lesekommando | | |
| 178 | öffentlicher Schlüssel | | |
| 179 | Antwort | | |
| 180 | öffentlicher Schlüssel | | |
| 181 | Display | | |
| 182 | privater Schlüssel | | |
| 183 | Speicher | | |
| 184 | privater Schlüssel | | |
| 186 | Sperrliste | | |
| 187 | privater Schlüssel | | |
| 188 | öffentlicher Schlüssel | | |
| 189 | privater Schlüssel | | |
| 190 | Kanal | | |
| 192 | Datensatz | | |
| 194 | Auswahlinformation | | |
| 198 | nachgeladene Attribute | | |
| 203 | Dienst-Attributspezifikation | | |
| 205 | Antwort | | |
| 207 | Lesekommando | | |
| 231 | Programminstruktionen | | |
| 232 | Programminstruktionen | | |
| 256 | Programminstruktionen | | |
| 272 | Attribut-Provider-Computersystem | | |
| 273 | Attribut-Provider-Computersystem | | |
| 274 | Attribut-Provider-Computersystem | | |
| 276 | Antwort | | |
| 278 | dritte Attributspezifikation | | |
| 280 | Nachricht | | |
| 282 | Bedienelement | | |

## Patentansprüche

1. Verfahren zur Erzeugung eines Zertifikats (167) für einen Sicherheitstoken (156) eines Nutzers (102) durch einen ID-Token (106) desselben Nutzers, wobei in dem ID-Token ein Zertifikat (103) einer Dokumenten-PKI (300) gespeichert ist und der ID-Token einen geschützten Speicherbereich aufweist, in dem ein dem Zertifikat (103) der Dokumenten-PKI zugeordneter privater Schlüssel (105; 187), ein oder mehrere Attribute (124, 198) und eine über eine Kommunikationsschnittstelle (108) des ID-Tokens empfangene Zeitinformation (107, TA') gespeichert sind, wobei in dem Sicherheitstoken ein Zertifikat (160) einer Berechtigungs-PKI (302) gespeichert ist, wobei in dem Zertifikat der Berechtigungs-PKI eine Schreibberechtigung für einen Schreibzugriff des Sicherheitstokens auf den geschützten Speicherbereich des ID-Tokens festgelegt ist, mit folgenden Schritten:
- Authentifizierung des Nutzers gegenüber dem ID-Token und gegenüber dem Sicherheitstoken,
- gegenseitige Authentifizierung des ID-Tokens und des Sicherheitstokens unter Verwendung des Zertifikats (103) der Dokumenten-PKI und des Zertifikats (160) der Berechtigungs-PKI,
- Erzeugung eines kryptografischen Schlüsselpaars (166) bestehend aus einem privaten Schlüssel (189) und einem öffentlichen Schlüssel 173) durch den Sicherheitstoken,
- Durchführung des Schreibzugriffs des Sicherheitstokens auf den geschützten Speicherbereich des ID-Tokens zur Speicherung des öffentlichen Schlüssels des erzeugten Schlüsselpaars in dem ID-Token,
- Durchführung eines Lesezugriffs des ID-Tokens auf den geschützten Speicherbereich, um den öffentlichen Schlüssel, die Zeitinformation und zumindest das eine Attribut zu lesen,
- Erzeugung eines Datensatzes (192), der den öffentlichen Schlüssel, die Zeitinformation und das zumindest eine Attribut beinhaltet durch den ID-Token,
- Signierung des Datensatzes mit dem in dem geschützten Speicherbereich gespeicherten privaten Schlüssel (105, 187) durch den ID-Token zur Erzeugung des Zertifikats,
- Ausgabe des Zertifikats durch den ID-Token.

2. Verfahren nach Anspruch 1, wobei die Zeitinformation mit folgenden Schritten empfangen wird:
- Empfang eines Zertifikats (172) eines Computersystems (171) zur Authentifizierung des Computersystems gegenüber dem ID-Token, wobei das Zertifikat des Computersystems eine Angabe der Anfangszeit (TA) von der Gültigkeitsdauer des Zertifikats (172) beinhaltet,
- Überprüfung der Validität des Zertifikats durch den ID-Token,
- Speicherung der Anfangszeit des Zertifikats als die Zeitinformation in dem geschützten Speicherbereich durch den ID-Token, wenn der ID-Token das Zertifikat als valide erkannt hat.

3. Verfahren nach Anspruch 2, wobei in dem geschützten Speicherbereich eine gespeicherte Zeitinformation (TA') initial gespeichert ist, und die Anfangszeit (TA) des Zertifikats in dem geschützten Speicherbereich gespeichert wird, um die dort gespeicherte Zeitinformation (TA') zu ersetzen, wenn die Anfangszeit des Zertifikats nach der gespeicherten Zeitinformation (TA') liegt, wobei dieser Vorgang bei jedem Empfang eines weiteren Zertifikats von dem Computersystem wiederholt wird.

4. Verfahren nach Anspruch 1, 2 oder 3, wobei zwischen dem ID-Token und dem Sicherheitstoken ein Kanal (190) mit Ende-zu-Ende-Verschlüsselung aufgebaut wird, wobei der Schreibzugriff des Sicherheitstokens zur Übertragung des erzeugten öffentlichen Schlüssels zu dem ID-Token über den Kanal mit Ende-zu-Ende-Verschlüsselung erfolgt.

5. Verfahren nach einem der vorhergehenden Ansprüche, wobei der erzeugte öffentliche Schlüssel (173) durch den Sicherheitstoken signiert wird, und der ID-Token den aufgrund des Schreibzugriffs von dem Sicherheitstoken empfangenen signierten öffentlichen Schlüssel nur unter der Voraussetzung in dem geschützten Speicherbereich speichert, dass die Signatur des öffentlichen Schlüssels valide ist, und/oder
wobei der ID-Token über seine Kommunikationsschnittstelle ein Auswahlsignal von einem Nutzer-Computersystem empfängt, welche als Auswahlinformation (194) in dem elektronischen Speicher (118) gespeichert wird, wobei das Auswahlsignal eine Auswahl der in dem geschützten Speicherbereich des ID-Tokens gespeicherten Attribute angibt, und der ID-Token nur auf die in dem Auswahlsignal ausgewählten Attribute zugreift, um diese zusammen mit der Zeitinformation und dem öffentlichen Schlüssel zur Erzeugung des zu signierenden Datensatzes (192) zu verwenden.

6. Verfahren nach einem der vorhergehenden Ansprüche, wobei das Zertifikat der Berechtigungs-PKI einen öffentlichen Sektorenschlüssel (176) beinhaltet, der für mehrere der Sicherheitstoken identisch ist, wobei der Sektorenschlüssel oder ein kryptografisch davon abgeleiteter Wert, insbesondere ein Hash-Wert des Sektorenschlüssels, zusammen mit dem öffentlichen Schlüssel (173), der Zeitinformation und dem zumindest einem Attribut von dem ID-Token zur Erzeugung des Datensatzes verwendet wird.

7. Verfahren nach einem der vorhergehenden Ansprüche, wobei in dem geschützten Speicherbereich des ID-Tokens zumindest ein weiterer privater Schlüssel (182, 184) gespeichert ist, wobei der ID-Token aus dem weiteren privaten Schlüssel und dem öffentlichen Sektorschlüssel (176) zumindest einen Identifikator berechnet, vorzugsweise durch Punktmultiplikation des weiteren privaten Schlüssels und des öffentlichen Sektorschlüssels auf einer elliptischen Kurve, wobei der zumindest eine Identifikator zusammen mit dem öffentlichen Schlüssel (173), der Zeitinformation, dem zumindest einem Attribut und dem öffentlichen Sektorschlüssel oder dem davon abgeleiteten Wert zur Erzeugung des zu signierenden Datensatzes (192) verwendet wird.

8. Verfahren nach Anspruch 7, wobei der Identifikator als Sperrmerkmal für das von dem ID-Token erzeugte Zertifikat verwendet wird.

9. Verfahren nach einem der vorhergehenden Ansprüche, wobei zur Kommunikation des Nutzers mit dem ID-Token und dem Sicherheitstoken sowie für die gegenseitige Kommunikation zwischen dem ID-Token und dem Sicherheitstoken ein Nutzer-Computersystem (100) verwendet wird, wobei der Nutzer eine erste PIN in das Nutzer-Computersystem eingibt, um sich gegenüber dem ID-Token zu authentifizieren und der Nutzer eine zweite PIN in das Nutzer-Computersystem eingibt, um sich gegenüber dem Sicherheitstoken zu authentifizieren, wobei der Kanal (190) mit Ende-zu-Ende-Verschlüsselung zwischen dem ID-Token und dem Sicherheitstoken über das Nutzer-Computersystem aufgebaut wird.

10. Verfahren nach Anspruch 9, wobei das Nutzer-Computersystem ein erstes Lesegerät (101) für den ID-Token und ein zweites Lesegerät (158) für den Sicherheitstoken aufweist.

11. Verfahren nach einem der vorhergehenden Ansprüche, wobei es sich bei dem ID-Token um ein Dokument, insbesondere ein Wert- oder Sicherheitsdokument, insbesondere ein hoheitliches Dokument, insbesondere ein papierbasiertes und/oder kunststoffbasiertes Dokument, wie zum Beispiel ein elektronisches Ausweisdokument, insbesondere Reisepass, Personalausweis, Visum, Führerschein, Fahrzeugschein, Fahrzeugbrief, Gesundheitskarte, oder einen Firmenausweis, oder eine anderes ID-Dokument, eine Chipkarte, Zahlungsmittel, insbesondere Banknote, Bankkarte oder Kreditkarte, Frachtbrief oder einen sonstigen Berechtigungsnachweis handelt und der ID-Token eine kontaktbehaftete oder kontaktlose Schnittstelle, insbesondere eine kontaktlose Schnittstelle nach einem RFID- und/oder NFC-Standard, aufweist, und/oder
wobei es sich bei dem Sicherheitstoken um eine Chipkarte, einen USB-Stick oder ein anderes Secure Element (SE) mit einer Signaturfunktion und/oder einer Authentifizierungsfunktion handelt, wobei die Signaturfunktion und/oder einer Authentifizierungsfunktion zur Verwendung des von dem ID-Token ausgegebenen Zertifikats ausgebildet ist, und der Sicherheitstoken eine kontaktbehaftete oder kontaktlose Schnittstelle, insbesondere eine kontaktlose Schnittstelle nach einem RFID- und/oder NFC-Standard, aufweist.

12. Verfahren nach einem der vorhergehenden Ansprüche, wobei das von dem ID-Token erzeugte Zertifikat (167) in dem Sicherheitstoken gespeichert wird und der Nutzer eine Signatur-PIN zur Freischaltung einer Signaturfunktion des Sicherheitstokens eingibt, sodass der Sicherheitstoken mithilfe des von dem ID-Token erzeugten Zertifikats und dem privaten Schlüssel des erzeugten Schlüsselpaars eine Signatur erzeugt.

13. Verfahren nach einem der vorhergehenden Ansprüche, mit folgenden Schritten zum Nachladen von Attributen:
- Senden einer Dienstanforderung (103) des Nutzers von einem Nutzer-Computersystem (100) über ein Netzwerk (116) an ein Dienst-Computersystem (150), welches mit einem ID-Provider-Computersystem (136) gekoppelt ist,
- Senden einer ersten Attributspezifikation (105) von dem Dienst-Computersystem an das ID-Provider-Computersystem über das Netzwerk, wobei die erste Attributspezifikation diejenigen Attribute spezifiziert, die das Dienst-Computersystem zur Erbringung des mit der Dienstanforderung angeforderten Dienstes benötigt,
- Authentifizierung des Nutzers gegenüber dem ID-Token,
- Authentifizierung des ID-Provider-Computersystems gegenüber dem ID-Token,
- Authentifizierung des ID-Tokens gegenüber dem ID-Provider-Computersystem,
- Aufbau eines ersten gesicherten Übertragungskanals (SM[CA]#1) mit Ende-zu-Ende-Verschlüsselung zwischen dem ID-Token und dem ID-Provider-Computersystem über das Netzwerk,
- Durchführung eines ersten Lesezugriffs (207) des ID-Provider-Computersystems auf den ID-Token zum Lesen der Attribute gemäß der ersten Attributspezifikation aus dem ID-Token,
- Übertragung einer in dem Speicherbereich des ID-Tokens gespeicherten ersten Teilmenge der in der ersten Attributspezifikation spezifizierten Attribute (109) von dem ID-Token an das ID-Provider-Computersystem über den ersten gesicherten Übertragungskanal,
- Erzeugung einer zweiten Attributspezifikation (111) einer zweiten Teilmenge der Attribute der ersten Attributspezifikation, die diejenige Attribute spezifiziert, welche in der ersten Teilmenge nicht beinhaltet sind und Übertragung der zweiten Attributspezifikation von dem ID-Provider-Computersystem an den ID-Token über den ersten gesicherten Übertragungskanal,
- Speicherung der zweiten Attributspezifikation in dem ID-Token,
- Authentifizierung eines Attribut-Provider-Computersystems (272) gegenüber dem ID-Token,
- Authentifizierung des ID-Tokens gegenüber dem Attribute-Provider-Computersystem,
- Aufbau eines zweiten gesicherten Übertragungskanals (SM[CA]#2) mit Ende-zu-Ende-Verschlüsselung zwischen dem Attribut-Provider-Computersystem und dem ID-Token, wobei der erste gesicherte Übertragungskanal bestehen bleibt,
- Übertragung der zweiten Attributspezifikation von dem ID-Token über den zweiten gesicherten Übertragungskanal an das Attribut-Provider-Computersystem,
- Durchführung eines Schreibzugriffs (276) des Attribut-Provider-Computersystems über den zweiten gesicherten Übertragungskanal zum Speichern von Attributen gemäß der zweiten Attributspezifikation in dem ID-Token, um hierdurch das Nachladen zu bewirken.

14. Verfahren nach Anspruch 13, mit folgenden weiteren Schritten:
- Durchführung eines zweiten Lesezugriffs (177) des ID-Provider-Computersystems über den ersten gesicherten Übertragungskanal zum Lesen der von dem Attribut-Provider-Computersystem gemäß der zweiten Attributspezifikation in dem ID-Token gespeicherten Attribute,
- Ausgabe der aufgrund der Lesezugriffe von dem ID-Provider-Computersystem aus dem ID-Token ausgelesenen Attribute an das Dienst-Computersystem.

15. Elektronisches System mit einem ID-Token (106), einem Sicherheitstoken (156) und einem Nutzer-Computersystem (100) sowie einem weiteren Computersystem (171), welches zur Durchführung eines Verfahrens nach einem der vorhergehenden Patentansprüche konfiguriert ist.

## Claims

1. A method for generating a certificate (167) for a security token (156) of a user (102) by an ID token (106) of the same user, wherein a certificate (103) of a document PKI (300) is stored in the ID token and the ID token has a protected memory area, in which there are stored a private key (105; 187) associated with the certificate (103) of the document PKI, one or more attributes (124, 198), and time information (107, TA') received via a communication interface (108) of the ID token, wherein a certificate (160) of an authorisation PKI (302) is stored in the security token, wherein a write authorisation for write access by the security token to the protected memory area of the ID token is specified in the certificate of the authorisation PKI, the method having the following steps:
- authenticating the user to the ID token and to the security token,
- mutually authenticating the ID token and the security token with use of the certificate (103) of the document PKI and of the certificate (160) of the authorisation PKI,
- generating a cryptographic key pair (166) consisting of a private key (189) and a public key (173) using the security token,
- performing the write access to the protected memory area of the ID token by means of the security token in order to store the public key of the generated key pair in the ID token,
- performing read access to the protected memory area by means of the ID token in order to read the public key, the time information, and at least the one attribute,
- generating a data set (192), which contains the public key, the time information, and the at least one attribute, by means of the ID token,
- signing the data set with the private key (105, 187) stored in the protected memory area by means of the ID token in order to generate the certificate,
- outputting the certificate by means of the ID token.

2. The method according to claim 1, wherein the time information is received by the following steps:
- receiving a certificate (172) of a computer system (171) in order to authenticate the computer system to the ID token, wherein the certificate of the computer system contains a specification of the start time (TA) of the period of validity of the certificate (172),
- checking the validity of the certificate by the ID token,
- storing the start time of the certificate as the time information in the protected memory area by means of the ID token if the ID token has identified the certificate as being valid.

3. The method according to claim 2, wherein stored time information (TA') is initially stored in the protected memory area, and the start time (TA) of the certificate is stored in the protected memory area, in order to replace the time information (TA') stored there if the start time of the certificate is after the stored time information (TA'), wherein this process is repeated each time a further certificate is received from the computer system.

4. The method according to claim 1, 2 or 3, wherein a channel (190) with end-to-end encryption is established between the ID token and the security token, wherein the write access by the security token is realised for transmission of the generated public key to the ID token via the channel with end-to-end encryption.

5. The method according to any one of the preceding claims, wherein the generated public key (173) is signed by the security token, and the ID token stores, in the protected memory area, the signed public key received from the security token on account of the write access only on the condition that the signature of the public key is valid, and/or
wherein the ID token receives a selection signal via its communication interface from a user computer system, which signal is stored as selection information (194) in the electronic memory (118), wherein the selection signal specifies a selection of the attributes stored in the protected memory area of the ID token, and the ID token access only the attributes selected in the selection signal, in order to use these together with the time information and the public key for generation of the data set (192) to be signed.

6. The method according to any one of the preceding claims, wherein the certificate of the authorisation PKI contains a public sector key (176), which is identical for a plurality of the security tokens, wherein the sector key or a value derived cryptographically therefrom, in particular a hash value of the sector key, is used by the ID token together with the public key (173), the time information, and the at least one attribute in order to generate the data set.

7. The method according to any one of the preceding claims, wherein at least one further private key (182, 184) is stored in the protected memory area of the ID token, wherein the ID token calculates at least one identifier from the further private key and the public sector key (176), preferably by point multiplication of the further private key and the public sector key on an elliptical curve, wherein the at least one identifier together with the public key (173), the time information, the at least one attribute, and the public sector key or the value derived therefrom is used to generate the data set (192) to be signed.

8. The method according to claim 7, wherein the identifier is used as locking feature for the certificate generated by the ID token.

9. The method according to any one of the preceding claims, wherein a user computer system (100) is used for communication of the user with the ID token and the security token and also for the reciprocal communication between the ID token and the security token, wherein the user inputs a first PIN into the user computer system in order to authenticate himself to the ID token, and the user inputs a second PIN into the user computer system in order to authenticate himself to the security token, wherein the channel (190) is established with end-to-end encryption between the ID token and the security token via the user computer system.

10. The method according to claim 9, wherein the user computer system comprises a first reader (101) for the ID token and a second reader (158) for the security token.

11. The method according to any one of the preceding claims, wherein the ID token is a document, in particular a value or security document, in particular a sovereign document, in particular a paper-based and/or plastic-based document, for example an electronic identification document, in particular a passport, personal identity card, visa, driver's licence, vehicle certificate, vehicle registration document, health insurance card or a company identification document, or another ID document, a chip card, payment means, in particular a banknote, bank card or credit card, consignment note and/or other proof of authority, and the ID token has a contact-based or contactless interface, in particular a contactless interface according to an RFID and/or NFC standard, and/or
wherein the security token is a chip card, a USB stick, or another secure element (SE) with a signature function and/or an authentication function, wherein the signature function and/or an authentication function is designed for use of the certificate output by the ID token, and the security token has a contact-based or contactless interface, in particular a contactless interface according to the RFID and/or NFC standard.

12. The method according to any one of the preceding claims, wherein the certificate (167) generated by the ID token is stored in the security token and the user inputs a signature PIN to release a signature function of the security token, such that the security token generates a signature with the aid of the certificate generated by the ID token and the private key of the generated key pair.

13. The method according to any one of the preceding claims, with the following steps for downloading attributes:
- sending a service request (103) of the user from a user computer system (100) via a network (116) to a service computer system (150) which is coupled to an ID provider computer system (136),
- sending a first attribute specification (105) from the service computer system to the ID provider computer system via the network, wherein the first attribute specification specifies those attributes that the service computer system requires in order to provide the service requested by the service request,
- authenticating the user to the ID token,
- authenticating the ID provider computer system to the ID token,
- authenticating the ID token to the ID provider computer system,
- establishing a first secured transmission channel (SM[CA]#1) with end-to-end encryption between the ID token and the ID provider computer system via the network,
- performing a first read access (207) by means of the ID provider computer system to the ID token in order to read from the ID token the attributes according to the first attribute specification,
- transmitting a first subset of the attributes (109) specified in the first attribute specification and stored in the memory area of the ID token from the ID token to the ID provider computer system via the first secured transmission channel,
- generating a second attribute specification (111) of a second subset of the attributes of the first attribute specification which specifies those attributes that are not contained in the first subset, and transmitting the second attribute specification from the ID provider computer system to the ID token via the first secured transmission channel,
- storing the second attribute specification in the ID token,
- authenticating an attribute provider computer system (272) to the ID token,
- authenticating the ID token to the attribute provider computer system,
- establishing a second secured transmission channel (SM[CA]#2) with end-to-end encryption between the attribute provider computer system and the ID token, wherein the first secured transmission channel is maintained,
- transmitting the second attribute specification from the ID token via the second secured transmission channel to the attribute provider computer system,
- performing a read access (276) by means of the attribute provider computer system via the second secured transmission channel in order to store in the ID token attributes according to the second attribute specification in order to hereby bring about the download.

14. The method according to claim 13, with the following further steps:
- performing a second read access (177) by means of the ID provider computer system via the first secured transmission channel in order to read the attributes stored in the ID token by the attribute provider computer system according to the second attribute specification,
- outputting to the service computer system the attributes read from the ID token on account of the read access procedures performed by the ID provider computer system.

15. An electronic system comprising an ID token (106), a security token (156), and a user computer system (100), as well as a further computer system (171) which is configured to carry out a method according to any one of the preceding claims.

## Revendications

1. Procédé de création d'un certificat (167) pour un jeton de sécurité (156) d'un utilisateur (102) par un jeton d'identification ID (106) de ce même utilisateur, où un certificat (103) d'une infrastructure de clé publique ICP de documents (300) est stocké dans le jeton d'ID et le jeton d'ID présente une zone de mémoire sécurisée dans laquelle sont stockés une clé privée (105 ; 187) associée au certificat (103) de l'ICP de documents (300), un ou plusieurs attributs (124, 198) et une information horaire (107, TA') reçue par le biais d'une interface de communication (108) du jeton d'ID, où un certificat (160) d'une ICP d'autorisation (302) est stocké dans le jeton de sécurité, où une autorisation d'écriture pour un accès en écriture du jeton de sécurité pour la zone de mémoire sécurisée du jeton d'ID est stipulée dans le certificat de l'ICP d'autorisation, avec les étapes suivantes :
- l'authentification de l'utilisateur vis-à-vis du jeton d'ID et vis-à-vis du jeton de sécurité,
- l'authentification réciproque du jeton d'ID et du jeton de sécurité moyennant l'emploi du certificat (103) de l'ICP de documents et du certificat (160) de l'ICP d'autorisation,
- la création d'une paire de clés cryptographiques (166) constituée d'une clé privée (189) et d'une clé publique (173) par le jeton de sécurité,
- l'exécution de l'accès en écriture du jeton de sécurité sur la zone de mémoire sécurisée du jeton d'ID pour le stockage de la clé publique de la paire de clés créée dans le jeton d'ID,
- l'exécution d'un accès en lecture du jeton d'ID sur la zone de mémoire sécurisée afin de lire la clé publique, l'information horaire et l'au moins un attribut,
- la création d'un ensemble de données (192) qui contient la clé publique, l'information horaire et l'au moins un attribut par le jeton d'ID,
- la signature de l'ensemble de données avec la clé privée (105, 187) stockée dans la zone de mémoire sécurisée par le jeton d'ID pour la création du certificat,
- l'édition du certificat par le jeton d'ID.

2. Procédé selon la revendication 1, dans lequel l'information horaire est reçue par les étapes suivantes :
- la réception d'un certificat (172) d'un système informatique (171) pour l'authentification du système informatique vis-à-vis du jeton d'ID, où le certificat du système informatique contient une indication de l'heure de démarrage (TA) de la durée de validité du certificat (172),
- la vérification de la validité du certificat par le jeton d'ID,
- le stockage de l'heure de démarrage du certificat sous forme d'information horaire dans la zone de mémoire sécurisée par le jeton d'ID lorsque le jeton d'ID a reconnu le certificat comme valide.

3. Procédé selon la revendication 2, dans lequel une information horaire (TA') est initialement stockée dans la zone de mémoire sécurisée et l'heure de démarrage (TA) du certificat est stockée dans la zone de mémoire sécurisée afin d'y remplacer l'information horaire (TA') stockée lorsque l'heure de démarrage du certificat se situe après l'information horaire (TA') stockée, où ce processus est répété lors de chaque réception d'un autre certificat par le système informatique.

4. Procédé selon la revendication 1, la revendication 2 ou la revendication 3, dans lequel un canal (190) est établi avec un cryptage de bout en bout entre le jeton d'ID et le jeton de sécurité, où l'accès en écriture du jeton de sécurité a lieu avec un cryptage de bout en bout pour la transmission de la clé publique créée vers le jeton d'ID par le biais du canal.

5. Procédé selon l'une des revendications précédentes, dans lequel la clé publique (173) créée est signée par le jeton de sécurité, et le jeton d'ID ne stocke la clé publique signée reçue par le jeton de sécurité en raison de l'accès en écriture dans la zone de mémoire sécurisée qu'à la condition que la signature de la clé publique est valide, et/ou
dans lequel le jeton d'ID reçoit un signal de sélection d'un système informatique d'utilisateur par le biais de son interface de communication, lequel est stocké sous forme d'information de sélection (19) dans la mémoire électronique (118), où le signal de sélection indique une sélection des attributs stockés dans la zone de mémoire sécurisée du jeton d'ID et le jeton d'ID accède uniquement aux attributs sélectionnés dans le signal de sélection afin d'utiliser ceux-ci conjointement avec l'information horaire et la clé publique pour la création de l'ensemble de données (192) signé.

6. Procédé selon l'une des revendications précédentes, dans lequel le certificat contient l'ICP d'autorisation d'une clé de secteur (176) publique qui est identique pour plusieurs parmi les jetons de sécurité, où la clé de secteur ou une valeur en étant dérivée de manière cryptographique, notamment, une valeur de hachage de la clé de secteur, est employée conjointement avec la clé publique (173), l'information horaire et l'au moins un attribut, par le jeton d'ID pour la création de l'ensemble de données.

7. Procédé selon l'une des revendications précédentes, dans lequel au moins une nouvelle clé privée (182, 184) est stockée dans la zone de mémoire sécurisée du jeton d'ID, où le jeton d'ID calcule au moins un identificateur à partir de la nouvelle clé privée et de la clé de secteur (176) publique, de préférence, par une multiplication de points de la nouvelle clé privée et de la clé de secteur publique sur une courbe en ellipse, où l'au moins un identificateur est employé conjointement avec la clé publique (173), l'information horaire, l'au moins un attribut et la clé de secteur publique ou la valeur en étant déduite, pour la création de l'ensemble de données (192) à signer.

8. Procédé selon la revendication 7, dans lequel l'identificateur est employé en tant que caractéristique de verrouillage pour le certificat créé par le jeton d'ID.

9. Procédé selon l'une des revendications précédentes, dans lequel un système informatique d'utilisateur (100) est employé pour la communication de l'utilisateur avec le jeton d'ID et le jeton de sécurité, ainsi que pour la communication réciproque entre le jeton d'ID et le jeton de sécurité, où l'utilisateur entre un premier code PIN dans le système informatique d'utilisateur afin de s'authentifier vis-à-vis du jeton d'ID et l'utilisateur entre un deuxième code PIN dans le système informatique d'utilisateur afin de s'authentifier vis-à-vis du jeton de sécurité, où le canal (190) est établi avec un cryptage de bout en bout entre le jeton d'ID et le jeton de sécurité par le biais du système informatique d'utilisateur.

10. Procédé selon la revendication 9, dans lequel le système informatique d'utilisateur présente un premier lecteur (101) pour le jeton d'ID et un deuxième lecteur (158) pour le jeton de sécurité.

11. Procédé selon l'une des revendications précédentes, dans lequel, dans le cas du jeton d'ID, il s'agit d'un document, notamment, un document de valeur ou de sécurité, en particulier, un document de souveraineté, notamment un document à base de papier et/ou à base de matière plastique, comme, par exemple, un document d'identité électronique, notamment un passeport, une carte d'identité un visa, un permis de conduire, une immatriculation de véhicule, un document de référence de véhicule, une carte de santé ou une carte d'entreprise, ou un autre document d'identité, une carte à puce, un moyen de paiement, notamment un billet de banque, une carte bancaire ou une carte de crédit, un connaissement ou un autre document d'autorisation et le jeton d'ID présente une interface nécessitant un contact ou sans contact, notamment une interface sans contact selon une norme RFID et/ou NFC, et/ou dans lequel, dans le cas du jeton de sécurité, il s'agit d'une carte à puce, d'une clé USB ou d'un autre élément de sécurité (ES) doté d'une fonction de signature et/ou d'une fonction d'authentification, où la fonction de signature et/ou une fonction d'authentification est conçue pour l'emploi du certificat entré par le jeton d'ID, et le jeton de sécurité présente une interface nécessitant un contact ou sans contact, notamment une interface sans contact selon une norme RFID et/ou NFC.

12. Procédé selon l'une des revendications précédentes, dans lequel le certificat (167) créé par le jeton d'ID est stocké dans le jeton de sécurité et l'utilisateur entre un code PIN de signature pour la libération d'une fonction de signature du jeton de sécurité de sorte que le jeton de sécurité génère une signature à l'aide du certificat créé par le jeton d'ID et de la clé privée de la paire de clés créée.

13. Procédé selon l'une des revendications précédentes, avec les étapes suivantes pour la recharge d'attributs :
- l'envoi d'une demande de service (103) de l'utilisateur d'un système informatique d'utilisateur (100) par le biais du réseau (116) à un système informatique de service (150), lequel est couplé avec un système informatique de fournisseur d'ID (136),
- l'envoi d'une première spécification d'attribut (105) du système informatique de service au système informatique de fournisseur d'ID par le biais du réseau, où la première spécification d'attribut spécifie les attributs en question dont le système informatique de service a besoin pour la réalisation du service demandé avec la demande de service,
- l'authentification de l'utilisateur vis-à-vis du jeton d'ID
- l'authentification du système informatique de fournisseur d'ID vis-à-vis du jeton d'ID,
- l'authentification du jeton d'ID vis-à-vis du système informatique de fournisseur d'ID,
- l'établissement d'un premier canal de transmission (SM[CA]#1) sécurisé avec un cryptage de bout en bout entre le jeton d'ID et le système informatique de fournisseur d'ID par le biais du réseau,
- l'exécution d'un premier accès en lecture (207) du système informatique de fournisseur d'ID pour la lecture des attributs selon la première spécification d'attribut à partir du jeton d'ID,
- la transmission d'une première quantité partielle des attributs (109) spécifiés dans la première spécification d'attribut stockée dans la zone de mémoire du jeton d'ID à partir du jeton d'ID vers le système informatique de fournisseur d'ID par le biais du premier canal de transmission sécurisé,
- la création d'une deuxième spécification d'attribut (111) d'une deuxième quantité partielle des attributs de la première spécification d'attribut qui spécifie les attributs en question lesquels ne sont pas contenus dans la première quantité partielle et la transmission de la deuxième spécification d'attribut du système informatique de fournisseur d'ID vers le jeton d'ID par le biais du premier canal de transmission sécurisé,
- le stockage de la deuxième spécification d'attribut dans le jeton d'ID,
- l'authentification d'un système informatique de fournisseur d'attributs (272) vis-à-vis du jeton d'ID,
- l'authentification du jeton d'ID vis-à-vis du système informatique de fournisseur d'attributs,
- l'établissement d'un deuxième canal de transmission (SM[CA]#2) sécurisé avec un cryptage de bout en bout entre le système informatique de fournisseur d'attributs et le jeton d'ID, où le premier canal de transmission sécurisé reste conservé,
- la transmission de la deuxième spécification d'attribut du jeton d'ID au système informatique de fournisseur d'attribut par le biais du deuxième canal de transmission sécurisé,
- l'exécution d'un accès en écriture (276) du système informatique de fournisseur d'attributs par le biais du deuxième canal de transmission sécurisé pour le stockage d'attributs selon la deuxième spécification d'attribut dans le jeton d'ID afin de provoquer ainsi la recharge.

14. Procédé selon la revendication 13, avec les autres étapes suivantes :
- l'exécution d'un deuxième accès en lecture (177) du système informatique de fournisseur d'ID par le biais du premier canal de transmission sécurisé pour la lecture des attributs stockés dans le jeton d'ID par le système informatique de fournisseur d'attributs selon la deuxième spécification d'attributs,
- l'édition des attributs lus à partir du jeton d'ID en raison de l'accès en lecture du système informatique de fournisseur d'ID dans le système informatique de service.

15. Système électronique avec un jeton d'ID (106), un jeton de sécurité (156) et un système informatique d'utilisateur (100) ainsi qu'un autre système informatique (171), lequel est configuré pour l'exécution d'un procédé selon l'une des revendications précédentes.
